# EUROPEAN PATENT APPLICATION

(11) **EP 3 722 959 A1**
(43) Date of publication of application: **14.10.2020**
(21) Application number: 20161583.8
(22) Date of filing: 06.03.2020
(51) Int. Cl.: G06F 12/0886, G06F 12/1027

(54) **SCALABLE APPLICATION-CUSTOMIZED MEMORY COMPRESSION**

(30) Priority: 10.04.2019 US 201916380114
(71) Applicant: INTEL Corporation, Santa Clara, CA 95054 (US)
(72) Inventor: GOPAL, Vinodh, Westborough, Massachusetts 01581 (US); PEFFERS, Simon N., Boston, Massachusetts 02114 (US)
(74) Representative: Rummler, Felix

(57) **Abstract**

Methods and apparatus for scalable application-customized memory compression. Data is selectively stored in system memory using compressed formats or uncompressed format using a plurality of compression schemes. A compression ID is used to identify the compression scheme (or no compression) to be used and included with read and write requests submitted to a memory controller. For memory writes, the memory controller dynamically compresses data written to memory cache lines using compression algorithms (or no compression) identified by compression ID. For memory reads, the memory controller dynamically decompresses data stored memory cache lines in compressed formats using decompression algorithms identified by the compression ID. Page tables and TLB entries are augments to include a compression ID field. The format of memory cache lines includes a compression metabit indicating whether the data in the cache line is compressed. Support for DMA reads and writes from IO devices such as GPUs using selective memory compression is also provided.

## Description

### BACKGROUND INFORMATION

In recent years there has been tremendous growth in emerging application such as Artificial Intelligence (AI), Deep Learning, and data analytics (sometimes referred to as Big Data). Each of these applications may be applied to very large datasets, which are processed on one or more high-performance servers, such as by distributing processing of the datasets across multiple of such servers. For example, these high-performance servers may include high-performance processors and large memory resources (*e.g.,* 16 GB or higher), typically in combination with one or more GPUs (graphic processor units) having their own large memory resources (*e.g.,* 6+ GB). During processing, tremendous amounts of data in memory are accessed, resulting in memory bandwidth being a performance bottleneck. While the size of available memory devices and memory densities continue to increase, the memory bandwidth supported by these devices and associated interconnects have been limited for various reasons, such as meeting error margins over interconnects operating at very-high frequencies and practical limitations in materials and manufacturing.

To have a better understanding of the level of memory access usage and associated performance bottlenecks, consider how data is processed by a CPU (central processing unit) of a processor. Modern processors include CPUs with multiple processor cores and a cache hierarchy with multiple levels of cache, such as a Level-1 (L1) cache, a Level-2 (L2) cache, and a Level-3 (L3) or Last Layer Cache (LLC). Typically, each processor core will include or be coupled to a "private" L1 and L2 cache, while the L3 or LLC cache is shared among the processor cores as either an inclusive or non-inclusive cache. The size of the caches decreases with level, and all the cache levels are much smaller than the system memory. Also, the bandwidths of the L1 and L2 caches are significantly higher than the L3/LLC, which in turn is generally multiple times greater than the system memory access bandwidth supported by the processor's memory controller, which is coupled between the system memory and the L3/LLC cache or otherwise coupled to an interconnect fabric to which the L3/LLC is also coupled. Thus, data transfers between system memory and the L3/LLC cache or interconnect fabric limit overall system performance.

This internal cache/memory hierarchy structure has been developed and evolved over many generations of processor architectures during the past 30+ years, and is well-suited for most applications, which generally do not access extremely large amounts of data *(e.g.,* on the order of Gigabytes of data). Conversely, applications such as AI, Deep Learning, and data analytics may involve levels of memory access that are orders of magnitude greater than most applications. As a result, performance levels for processing data for such applications are limited by current processor architectures.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:
Figure 1 is a schematic diagram of a first platform architecture including one or more on-chip IO devices comprising GPUs;
Figure 2 is a schematic diagram of a second platform architecture including one or more off-chip IO devices comprising GPUs or GPU cards;
Figure 3 is a schematic diagram illustrating implementation of a page table and page directory under an embodiment of a conventional approach;
Figure 3a is a schematic diagram illustrating an augmentation of the page table and page directory scheme of Figure 3 under which the page table information further identifies compression schemes used by memory pages;
Figure 4 is a schematic diagram of an address translation scheme including a translation lookaside buffer (TLB) employed by 64-bit processor architecture;
Figure 5 is a schematic diagram illustrating further details of the TLB of Figure 4, including translation registers;
Figure 6 is a schematic diagram illustrating TLB entries in an instruction TLB and a data TLB;
Figure 7 is a flowchart illustrating operations performed by an operating system and/or application to assign compression schemes to memory pages used by an application or process, according to one embodiment;
Figure 8a is a flowchart illustrating operations performed during execution of some instructions under which compression is not used, according to one embodiment;
Figure 8b is a flowchart illustrating operations for retrieving instructions that may be compressed, according to one embodiment;
Figure 9 is a flowchart illustrating operations and logic implemented during execution of store and load instructions, according to one embodiment;
Figure 10 is a schematic diagram of a computer system architecture illustrating a CPU core issuing a load or store instruction including a compression ID to a memory controller;
Figure 10a is a schematic diagram depicting a TLB snoop performed in connection with the dirty cache line eviction process of Figure 11;
Figure 11 is a flowchart illustrating operations and logic performed during an eviction of a dirty cache line from the LLC, according to one embodiment;
Figure 12 is a diagram illustrating the format of a cache line when stored in a processor cache;
Figure 12b is a diagram illustrating the format of a memory cache line stored in system memory, according to one embodiment;
Figure 12c is a diagram illustrating the format of a memory cache line stored in system memory the includes an encoded length field, according to one embodiment;
Figure 13 is a schematic diagram illustrating a computer system including a GPU card;
Figure 13a is a schematic diagram illustrating a TLB snoop performed by the computer system of Figure 13 in connection with a DMA read by an IO device illustrated in Figure 14b and a DMA write by an IO device illustrated in Figure 15b;
Figures 14a is a flowchart illustrating operations and logic to implement a DMA read for an IO device when a TLB entry in the IO devices device TLB has a hit; according to one embodiment;
Figures 14b is a flowchart illustrating operations and logic to implement a DMA read for an IO device when a TLB entry in the IO devices device has a miss; according to one embodiment;
Figures 15a is a flowchart illustrating operations and logic to implement a DMA write for an IO device when a TLB entry in the IO devices device TLB has a hit; according to one embodiment; and
Figures 15b is a flowchart illustrating operations and logic to v a DMA write for an IO device when a TLB entry in the IO devices device has a miss; according to one embodiment;
Figure 16a is a flowchart illustrating operations and logic to implement a memory read using an on-chip compressed size table, according to one embodiment;
Figure 16b is a flowchart illustrating operations to implement a memory write using an on-chip compressed size table, according to one embodiment;
Figure 17a is a flowchart illustrating operations to implement a memory read using an encoded length field, according to one embodiment; and
Figure 17b is a flowchart illustrating operations to implement a memory write using an encoded length field, according to one embodiment.

### DETAILED DESCRIPTION

Embodiments of methods and apparatus for scalable application-customized memory compression are described herein. In the following description, numerous specific details are set forth to provide a thorough understanding of embodiments of the invention. One skilled in the relevant art will recognize, however, that the invention can be practiced without one or more of the specific details, or with other methods, components, materials, *etc.* In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

For clarity, individual components in the Figures herein may also be referred to by their labels in the Figures, rather than by a particular reference number. Additionally, reference numbers referring to a particular type of component (as opposed to a particular component) may be shown with a reference number followed by "(typ)" meaning "typical." It will be understood that the configuration of these components will be typical of similar components that may exist but are not shown in the drawing Figures for simplicity and clarity or otherwise similar components that are not labeled with separate reference numbers. Conversely, "(typ)" is not to be construed as meaning the component, element, *etc.* is typically used for its disclosed function, implement, purpose, *etc.*

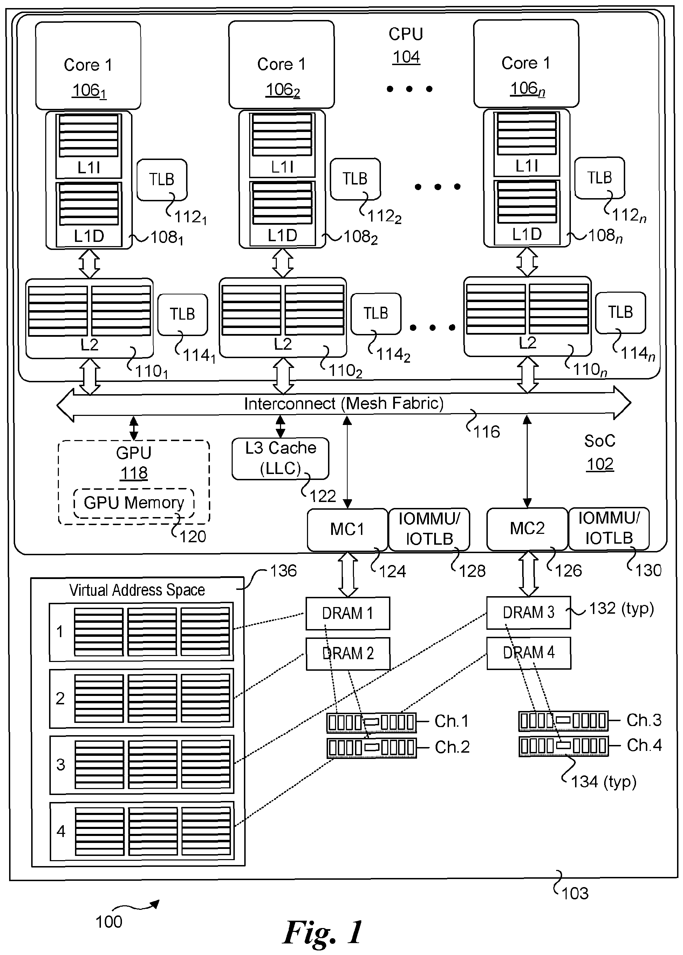

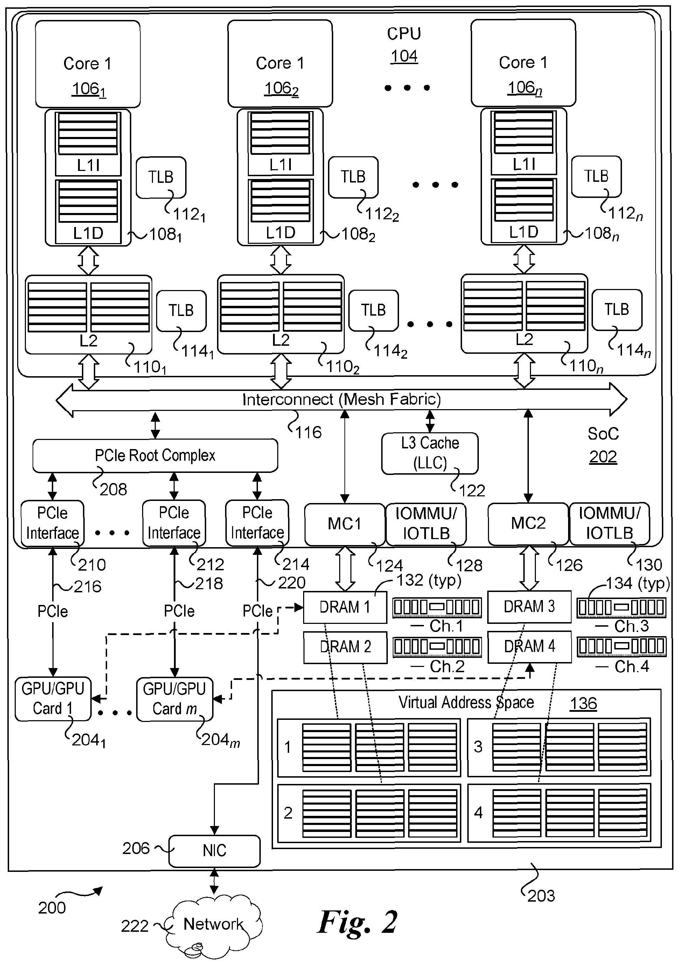

Figures 1 and 2 show exemplary platform architectures 100 and 200 under which aspects of the embodiments described herein may be implemented. Platform architecture 100 includes a processor 102 having a System on a Chip (SoC) architecture mounted to a main board 103. Processor 102 includes a central processing unit (CPU) (also referred to as the core or core unit) including *n* processor cores 106₁-106*ₙ*, wherein *n* is an integer. For example, *n* might be 2, 4, 6, 8, 10, 12, 16, or an even higher number. More generally, processor 102 is a multi-core processor, meaning it has at least two processor cores. Each of processor cores 106₁-106*ₙ* is coupled to first (L1) and second level (L2) caches, as depicted by L1 caches 108₁-108*ₙ* and L2 caches 110₁-110*ₙ*. As further illustrated each L1 cache 108₁-108*ₙ* includes both an instruction cache (L1I) and a data cache (L1D).

Each of the L1 and L2 caches is associated with a respective translation lookaside buffer (TLB), as illustrated by TLBs 112₁-112*ₙ* for L1 caches 108₁-108*ₙ* and TLBS 114₁-114*ₙ* for L2 caches 110₁-110*ₙ*. As further described and illustrated below, in some embodiments each of the L1 instruction and data caches L1I and L1D may have a respective TLB.

Processor 102 includes various interconnection circuitry that is used to interconnect various components on the processor. For simplicity, the interconnection circuitry is illustrated as an interconnect 116, which is also referred to as a mesh fabric. In practice, the mesh fabric may include one or more levels on interconnect infrastructure and an interconnection hierarchy, while each level may comprise a separate hierarchy unto itself *(e.g.,* nested interconnected hierarchies). Generally, a given interconnect hierarchy may employ both structure and operations defined by standardized protocols or proprietary protocols. Moreover, there may be bridges between layers to enable interfacing between different types of protocols.

Various components on processor 102 are interconnected via interconnect 116, including L2 caches 110₁-110*ₙ*, an optional graphics processor unit (GPU) 118 including GPU memory 120, a third-level (L3) cache 122 (also referred to as a last-level cache or LLC), and a pair of memory controllers 124 and 126 (also labeled MC1 and MC2). It is further noted that each of the components illustrated for each processor core, including the core, the L1 cache and the TLBs is communicatively coupled to interconnect 116, via either direct or indirect connection.

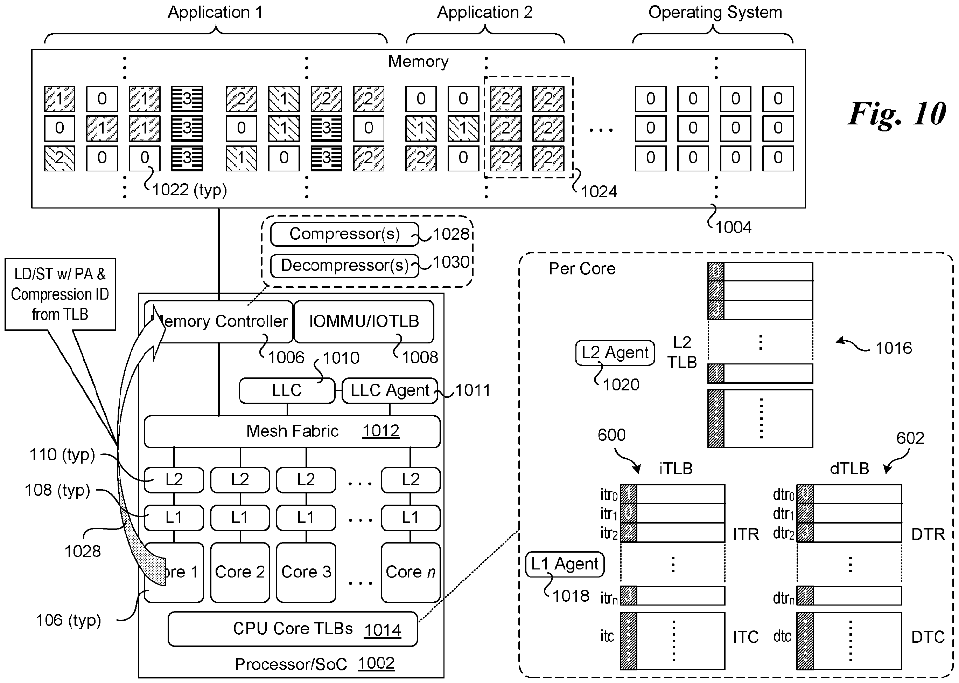

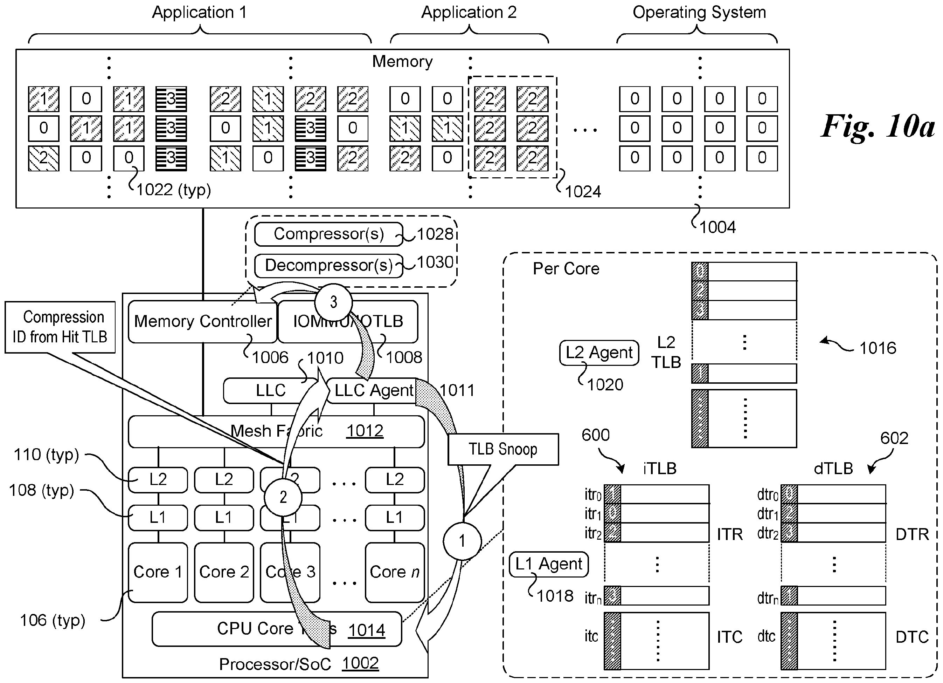

Each of memory controllers 124 and 126 also has an associated IOMMU and IO TLB, collectively depicted as IOMMU/IOTLB block 128 and 130. In embodiments implementing multiple accelerators, the accelerators may be interconnected in a chain, as represented by dashed double-arrow 120. As further shown in Figure 10, a processor will generally have additional components and interconnection circuitry that is not shown due to lack of space, including IO components and interfaces supporting communication with external IO components and expansion slots.

Each of memory controllers 124 and 126 includes one or more channels connected to one or more DRAM (Dynamic Random Access Memory) memory devices 132, such as Dual In-line Memory Modules (DIMMs) 134. In Figure 1, these DRAM memory devices are depicted as DRAM 1-4. In the illustrated embodiment, a respective memory channel is connected to each DRAM memory device 132, as indicated by Ch. 1, Ch. 2, Ch. 3, *etc.,* where "Ch." means channel. However, this is merely exemplary, as a memory controller may have more than one memory channel connected to the same memory device.

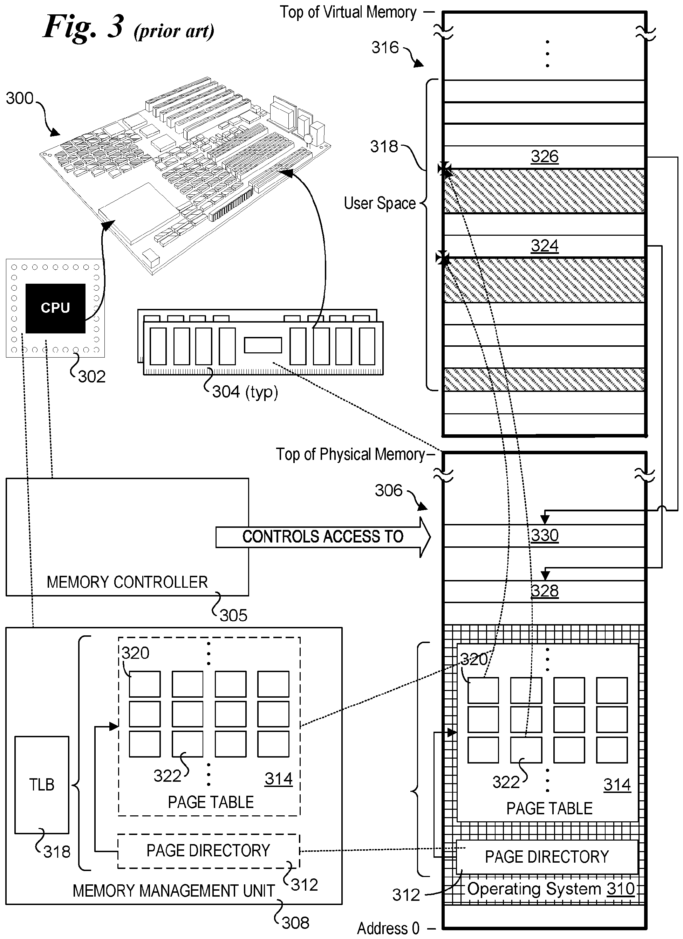

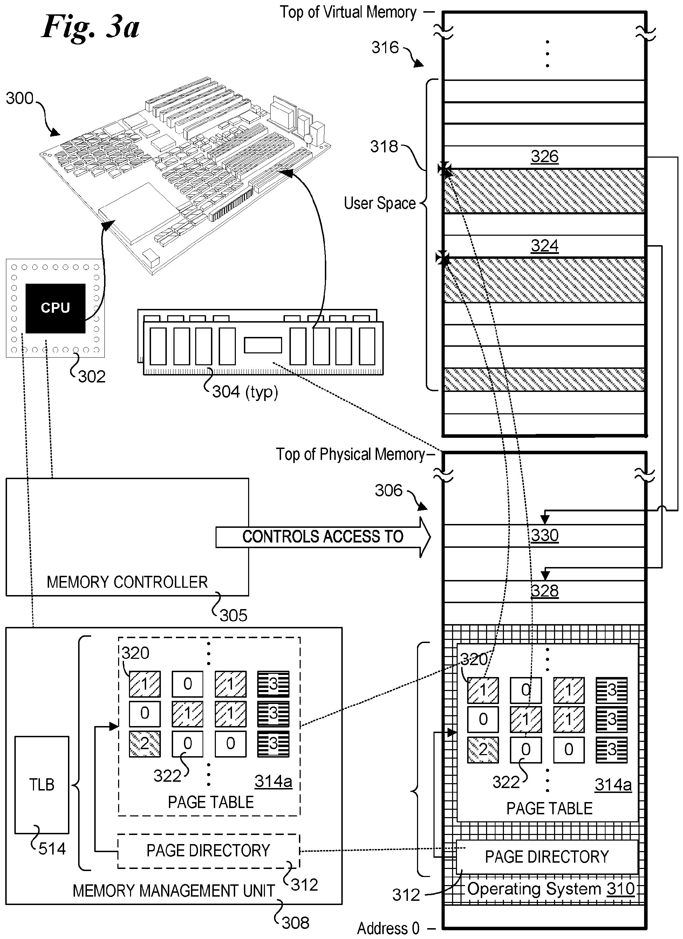

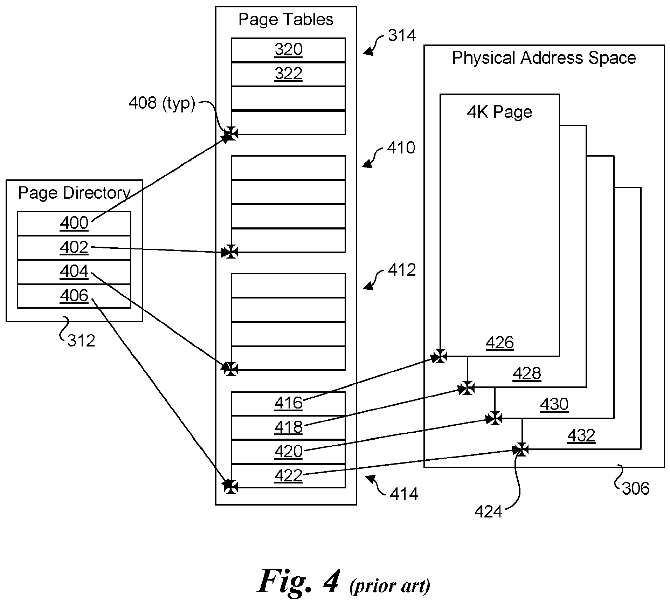

Each of DRAM memory devices 132 has a physical address space. Generally, the physical address space is partitioned into units of "pages," which are further partitioned into units of cache lines, although other addressing schemes may be used. The physical address spaces of the DRAM memory devices are mapped to a virtual address space, as shown by a virtual address space 136. The virtual address space is usually partitioned into a plurality of virtual memory "pages," and accessed at the page level, noting that individual cache lines may also be accessed with the pages. Mapping between the virtual and physical address spaces is generally handled by the memory controller and/or other platform components, including the IOMMU and the TLBs. The operating system may provide further aspects of this mapping, depending on the platform. Further details of the physical and virtual address spaces, page tables, and related components are discussed below with reference to Figures 3 and 4.

In one embodiment, processor 102 is operatively coupled to a printed circuit board comprising main board 103 via a "socket," or otherwise coupled to the main board via a direct coupling technique, such as flip-chip bonding. In either case, it is common practice in the art to refer to the processors themselves as sockets. Generally, main board 103 includes electrical wiring (*e.g.,* traces and vias) to facilitate electrical connections corresponding to the physical structure of various interconnects depicted in Figure 1.

Platform architecture 200 of Figure 2 includes a processor 202, four DRAM memory devices 132, *m* GPUs or GPU cards 204₁-204*ₘ*, and a Network Interface Controller (NIC) 206 mounted our otherwise coupled to a main board 203. In addition to components with like reference numbers in Figures 1 and 2, processor 202 includes IO components and interfaces comprising a PCIe (Peripheral Component Interconnect Express) Root Complex 208 coupled to multiple PCIe interfaces, depicted as PCIe interfaces 210, 212, and 214. PCIe interface 210 is coupled to accelerator 204₁ via a PCIe link 216, while PCIe interface 212 is coupled to accelerator 204*ₘ* via a PCIe link 218 and PCIe interface 214 is coupled to NIC 206 via a PCIe link 220. PCIe supports various lane widths and speeds, including 1x, 2x, 4x, 8x, and 16x configurations, wherein 'x' represents the number of lanes. Both existing and future PCIe links and interfaces may be used for the PCIe links and interfaces shown Figure 2 and discussed herein.

Under the embodiment of Figure 2, the *m* GPUs or GPU cards 204₁-204*ₘ* are illustrative of a platform architecture that includes one or more off-chip GPUs. An off-chip GPU may be implemented in a GPU chip that is mounted to a main board or daughter board or the like, or it may be implemented in a GPU card or board that is installed in an expansion slot, such as a PCIe expansion slot. It is also possible to have multiple GPU chips on the same GPU card or board. In addition, an off-chip GPU may include or access memory that is separate from the main system memory, such as memory that is embedded in a GPU chip, separate from the GPU chip on a multi-chip module, or memory that is installed on a GPU card or board.

Through use of Direct Memory Access (DMA) support provided by PCIe and related components, GPUs or GPU cards 204₁-204*ₘ* and/or NIC 206 may be enabled to access system memory (*e.g.,* DRAM memory devices 1-4) without requiring use of CPU 104. In addition, GPU or GPU cards may be configured to support shared virtual memory (SVM) under which a CPU and an IO device such as a GPU (or multiple GPUs) are enabled to share the same virtual memory space. For example, under some embodiments, the system platforms are configured to support OpenCL™ 2.0 Shared Virtual Memory. Other existing and future SVM schemes may also be supported. Other examples of IO devices that may be configured in an SVM scheme include but are not limited to accelerators.

Aspects of the embodiments herein relate to novel memory compression schemes that facilitate increased memory bandwidth by reducing the amount of data that is transferred between a memory controller and the system memory devices for a given unit of transfer, such as a cache line. To have a better understanding and appreciation of the how the memory compression schemes may be implemented, the following discussion of system memory access using page tables is provided.

Figure 3 shows a high-level view of a computer hardware architecture and how of memory is accessed on the computer using a conventional approach. The computer includes a system board 300 (also commonly referred to as a main board or motherboard) having a central processing unit (CPU) 302 and system memory comprising dual in-line memory modules (DIMMs) 304. CPU 302 is illustrative of various types of processors, including processors that employ System on a Chip (SoC) architectures. Historically, memory access on personal computers and servers were facilitated by a chipset including a CPU and a separate memory controller chip (such as a memory controller hub under INTEL® Corporation's Northbridge-Southbridge architecture). Under an SoC architecture, one or more memory controllers are integrated on the same chip as the processor core, such as depicted by a memory controller 304 in Figure 3.

Modern computer systems employ virtual memory schemes through a combination of hardware and software. At the hardware level, system memory is laid out as a linear address space called the physical address space, such as depicted by a physical address space 306 in Figure 3. The physical address space has an address range from a base address 0 to the top of physical memory, which correlates to the amount of physical memory available in the system (*e.g.,* 1 Gigabyte (GB), 4GB, 8GB, *etc*.). Memory controllers access (write and read) data stored in system memory via corresponding physical addresses in the physical address space. For example, under a coherent memory architecture, data is addressed using fixed-size blocks referred to as cache lines, with each cache line having a unique address. A 32-bit system uses 32-bit addressing for the cache lines, while a 64-bit system uses 64-bit addressing.

Under a virtual memory scheme, the physical address space of system memory is mapped to a virtual address space, typically using a paging scheme (noting other address mapping schemes are also used). In addition, pages of virtual memory may be swapped in and out of mass storage. The use of virtual memory provides the operating system (OS) with greater flexibility in terms of where application data and code is stored and also enables the system to operate as if it has more memory than the amount of physical memory that is actually installed. In addition, memory virtualization enables virtual machines to run on a host platform's physical hardware.

Under the scheme illustrated in Figure 3, CPU 302 includes a memory management unit (MMU) 308 that is used in conjunction with an operating system 310 to generate and store mappings between virtual memory pages and corresponding memory pages in physical memory. This is accomplished, in part, through address translation provided via use of a page directory 312 and multiple page tables 314 that are stored in physical memory 306 and accessed via MMU 308. During initialization, operating system 310 is loaded into physical memory 306 at a predetermined base address. Subsequently, the OS configures data in page directory 312 and pages table 314 to create address translation data used to map pages in a virtual address space 316 to corresponding pages in physical memory 306. To reduce accesses to physical memory 306 to obtain the page table mapping data, MMU 308 uses a translation lookaside buffer (TLB) 318 to cache page directory and page table data.

An exemplary set of page directory and page table configuration data is shown in Figure 4. Page directory 312 includes a number of page directory entries 400, 402, 404, and 406, each of which points to the location (physical address 408 of) a respective page table 314, 410, 412, and 414. In turn, each page table has a number of page table entries (PTEs), as illustrated by PTEs 416, 418, 420, and 422 for page table 414. Each PTE points to the base address 424 of a corresponding page in the system's physical address space 306, as depicted by pages 428, 430, 432, and 434. In the example of Figure 4, each physical page has a size of 4K (4096) Bytes, although other page sizes may be used, as well.

Returning to Figure 3, page table 314 includes multiple PTEs, including PTEs 320 and 322, which point to respective pages 324 and 326 in virtual address space 316. As further shown in Figure 3, the actual physical location where virtual pages 324 and 326 reside in physical memory 306 are a physical memory page 328 and a physical memory page 330, respectively.

### Overview of Scalable Application-Customized Memory Compression

The embodiments disclosed and illustrated herein support processor and platform architectures that implement memory compression schemes that are application-customized and scalable. The following provides a brief overview of some of the aspects and features.

According to one aspect, customized page-level compression may be implemented. For example, memory pages utilized by an application, process or VM may have a customized compression scheme that is applied to those memory pages, either globally or on a page-wise basis. Under one embodiment, a new compression identifier (ID) field is added to page-mapping tables and TLB entries, where the compression ID value of the field identifies the compression scheme that is used for the corresponding memory page in the page table. For example, if there are N such schemes, then the compression ID field in the page-mapping tables may have a corresponding value from 0 through N, where a value of 0 signifies an uncompressed page (in one embodiment), and integer values 1 through N are used to identify respective compression schemes.

According to another aspect, dynamic compression and decompression is performed at the memory controller to provide memory bandwidth savings. A benefit of this approach is no changes need to be made to software running on the host machine, as data submitted to the memory controller for memory writes are provided (via execution of the application or process thread) in uncompressed form, and the data that is returned in response to memory read requests is also in uncompressed form. Meanwhile, the data that is written to memory by the memory controller is dynamically compressed and stored in a compressed format (when available/applicable), and data stored in memory in a compressed format is dynamically decompressed by the memory controller prior to being returned to the requesting thread/process.

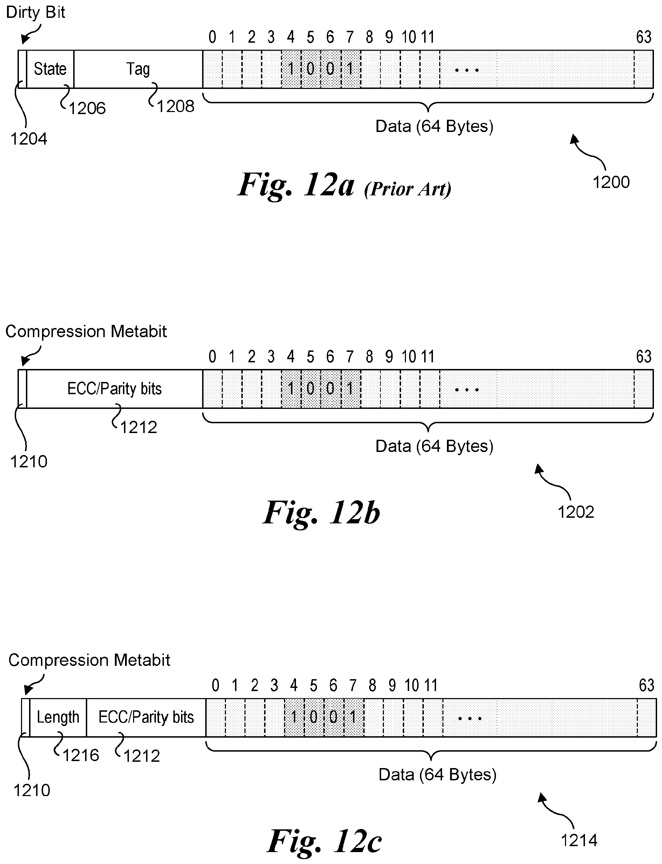

In one embodiment, load/store transactions include an associated compression scheme identifier (compression ID), such as a value from 0-N, that is sent to the memory controller as part of the processing pipeline for implementing the load/store transactions. In one embodiment, the platform uses a reserved bit in a memory cache line header referred to as a compression "metabit" to indicate whether a particular cache line is compressed or not, for each cache line in a page that has been activated for compression. Under an alternate scheme, an existing ECC (error correction code) bit is repurposed to record whether a cache line is compressed or not. An exemplary format of a cache line 1202 using a compression metabit is shown in Figure 12b and discussed below.

In some cases, the data for given cache line within a page that is associated with a compression scheme may either be incompressible, or the level of compression that would result through use of the compression scheme falls below a minimum compression threshold. In these cases, the data will be stored in an uncompressed format, under one embodiment.

Under another aspect, an operating system (OS) or Virtual Machine Monitor (VMM) or Hypervisor may profile pages from an application to determine whether compression is beneficial for those pages, and which compression scheme to use. The OS/VMM/Hypervisor can then enable that compression scheme for memory pages utilized by the application, either on an individual page basis, or globally for the application. Alternatively, an API (Application Program Interface) can be provided for applications to request a specific scheme from the OS or other platform software, such as a VMM or Hypervisor. While this scheme may result in better efficiency, it will require code to be included in the application to implement the request for the compression scheme(s) to be used. Such code may be included in new applications or may be included in a modification or update to an existing application. Meanwhile, the profiled method above, may be used for legacy applications without any code modification.

Using the foregoing approaches, a platform architecture may be configured to seamlessly scale to numerous compression schemes per CPU (or processor core), enabling compression customized to each application (or otherwise for selected application for which compression may be applied). This will enhance overall processor and platform performance by reducing the bandwidth used for memory writes and (optionally) reads.

Under one embodiment, an extension to the TLB is implemented to denote a compression ID that is used for the memory page associated with each TLB entry. When the virtual-to-physical address translation is performed in connection with a load or store transaction, the new compression ID field is also read and the compression ID is sent along with the PA to the memory controller if a valid copy of the cache line is not currently present in any of the processor caches (*e.g.,* in an L1 or L2 cache, or in the LLC, corresponding to a cache miss). In this architecture, data in the processor caches is stored in the uncompressed form. Accordingly, the compression ID field is not employed for cache hits (*i.e.,* when the data is stored in a cache line that is already cached).

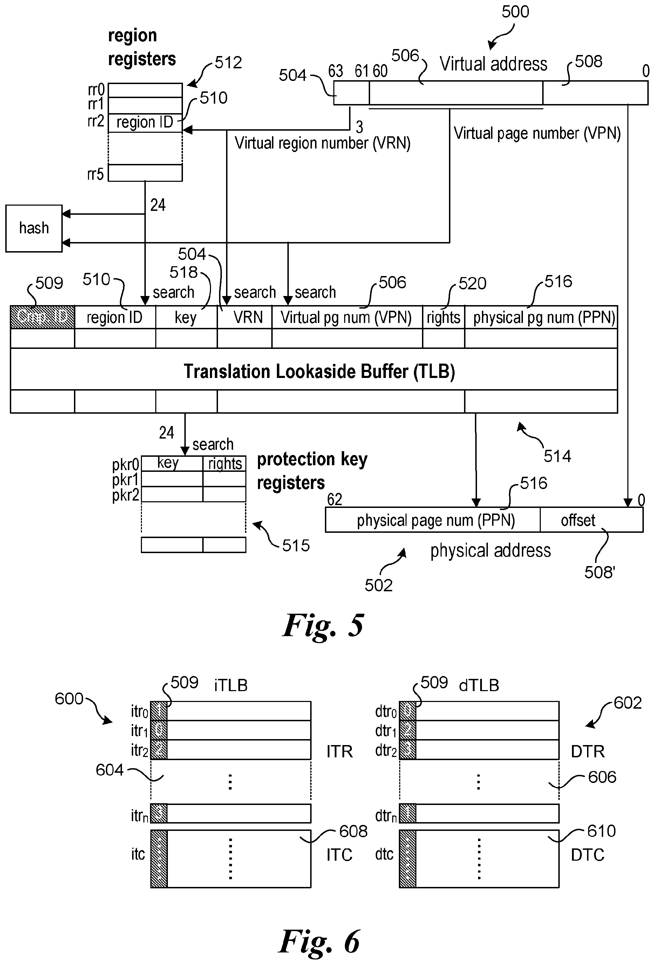

In accordance with aspects of various embodiments described and illustrated herein, including the embodiments of Figures 3a, and 6, TLB entries comprising VA-PA translations with a compression ID field are read or copied from TLBs and used to identify the compression scheme (or no compression scheme) for corresponding memory pages. To better understand operations associated with reading/copying TLB entries to determine memory page compression schemes in accordance with embodiments described herein, a discussion of the operation of an exemplary 64-bit TLB architecture is now provided, with reference to Figures 5 and 6.

The 64-bit TLB architecture employs a virtual addressing model, which is fundamentally a 64-bit flat linear address space. 64-bit registers are used as pointers into this address space. The architecture also supports 32-bit virtual linear addresses, which are zero-extended into the 64-bit virtual address space.

In one embodiment, the 64-bit virtual address space is divided into eight 2⁶¹ byte virtual regions. A region is selected by the upper 3-bits of the virtual address. Associated with each virtual region is a region register that specifies a 24-bit region identifier for the region. Eight out of the possible 2²⁴ virtual address spaces are concurrently accessible via 8 region registers. If desired, regions can be coalesced by assigning sequential region identifiers, *e.g.,* to produce 62-, 63-, or 64-bit spaces.

Figure 5 shows the process of mapping (also referred to as "translating") a virtual address 500 into a physical address 502, resulting in a VA-PA translation. The bits of virtual address 500 are divided into three fields: 504, 506, and 508. Field 504 comprises the most-significant three bits 61-63, which are used to point to a virtual region number (VRN). Field 508, which comprise the least significant bits, form the page offset. The remaining bits, comprising field 506, are used to specify a virtual page number (VPN). The page-offset bits (field 508) are passed through the translation process unmodified, as shown by a physical address page offset 508'. Exact bit positions for the page offset and VPN bits (field 506) vary depending on the page size used in the virtual mapping. Allowable page sizes include 4K, 8K, 16K, 64K, 256K, 1M, 4M, 16M, 64M, 256M, and 4G.

On a memory reference (other than an insert or purge), the VRN bits of field 504 select a region identifier (RID) 510 from 1 of the 8 region registers 512. A TLB 514 is then searched for a translation entry with a matching VPN and RID value. If a matching translation entry is found, the entry's physical page number (PPN) 516 is concatenated with the page-offset bits (offset 508') to form the physical address 502. Matching translations are qualified by page-granular privilege level access right checks and optional protection domain checks by verifying the translation's key is contained within a set of protection key registers 517 and read, write, or execute permissions are granted. The key value is defined in the TLB's key field 518, while access rights are specified in a rights field 520.

If a translation is not resident in the TLB, the processor may optionally search a virtual hash page table (VHPT) structure in memory (not shown) for the required translation and install the entry into the TLB. If the required entry cannot be found in either the TLB or VHPT, the processor raises a TLB Miss fault to request that the operating system supply the translation. After the operating system installs the translation in the TLB and/or VHPT, the faulting instruction can be restarted and execution resumes.

In one embodiment, a 64-bit processor maintains two architectural TLBs, as shown in Figure 6, including an instruction TLB (iTLB) 600 and a data TLB (DLTB) 602. Each TLB services translation requests for instruction and data memory references, respectively. The data TLB 602 also services translation request for references by the RSE and the VHPT walker. Each of instruction TLB 600 and the data TLB 602 are further divided into two sub-sections: Translation Registers (TR) (ITR 604 and DTR 606) and Translation Cache (TC) (ITC 608 and DTC 610).

The Translation Register section of the TLB is a fully-associative array defined to hold translations directly managed by software (*e.g.* an OS) and/or firmware. Software/firmware may explicitly insert a translation into a TR by specifying a register slot number. Translations are removed from the TRs by specifying a virtual address, page size and a region identifier. Translation registers allow the operating system to "pin" critical virtual memory translations in the TLB. Examples include I/O spaces, kernel memory areas, frame buffers, page tables, sensitive interruption code, *etc.*

In one embodiment, entries are placed into a specific TR slot with the Insert Translation Register (itr) instruction. Once a translation is inserted, the processor will not automatically replace the translation to make room for other translations. Local translations can only be removed by issuing the Purge Translation Register (ptr) instruction, under one embodiment.

As further illustrated in Figures 5 and 6, each TLB entry includes a compression ID field 509 in which a compression identifier is stored. As discussed above, the compression ID may have a value from 0-N in an embodiment with N compression schemes, with the value '0' being used to indicate no compression scheme is used. For example, a 2-bit compression ID field would support 3 compression schemes plus no compression, while a 3-bit compression ID field would support 7 compression schemes plus no compression. As an alternative to using a value of '0' to indicate no compression, a non-zero value may also be used.

As will be describe below in further detail, when TLB entries are added to a TLB the entries will include a compression ID field 509 indicative of the compression scheme used (or to be used) for the memory page associated with that TLB entry. Meanwhile, while the individual cache lines in memory for a given page may be encoded using the compression scheme, the individual cache lines themselves do not include a compression ID. Rather, in one embodiment a single bit comprising the aforementioned compression metabit is used to indicate whether a cache line in memory is compressed or not.

It will be appreciated by those having skill in the art that the foregoing description of a 64-bit TLB and associated architecture illustrated in Figures 5 and 6 are merely exemplary of one type of TLB and not limiting. Other types of TLB architectures may be implemented in accordance with the principles and teachings of the embodiments herein using techniques that are well-known in the art.

Figure 3a shows an example of a page table 314a that includes memory pages that use three compression schemes, as well as no compression, as indicated by numbers '0', '1', '2' or '3' for each memory page. As illustrated above in Figures 5 and 6, information concerning what compression scheme is used is stored in compression ID field 509 of TLB 514.

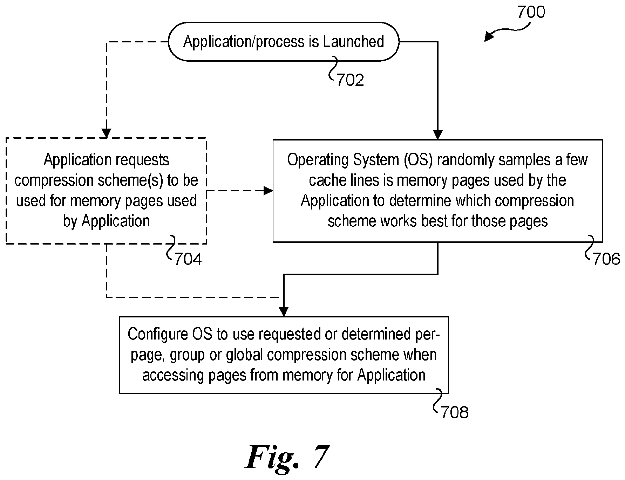

Figure 7 shows a flowchart 700 illustrating operations for configuring application-customized memory compression, according to one embodiment. The process begins in a start block 702 in which an application or process (such as the thread of an already execution application) is launched. As part of launching an application or process, a number of pages comprising a portion of the virtual memory space managed by the operating system will be allocated to the application/process. This will result in application instructions and data being loaded into pages in system memory based on the virtual addresses of the allocated pages and the virtual-to-physical address mappings of the pages. As will be recognized by those skilled in the art, the application/process instructions will be loaded into a portion of memory allocated for the process stack, while other memory pages will be allocated to the application heap. It is further noted that the size of the application heap (and thus the number of memory pages allocated to the heap) may generally be larger that the number of pages required, such that some of the allocated pages will initially be empty. During ongoing operations, the size of the heap may be changed, and process stacks may be added and/or removed.

In some embodiments an application may explicitly request a compression scheme to be used at one or more of the page-level, groups of pages, or globally for pages in the heap. This is depicted in an optional block 704. As an alternative, the operating system, VMM or Hypervisor may determine which compression scheme to apply to each page, or groups of pages (if applicable). For example, as shown in a block 706, the operating system randomly samples a few cache lines in memory pages that have been allocated and loaded with data to determine which compression scheme(s) works best for those pages. This initial configuration process is completed in a block 708 in which the operating system is configured to use the application-requested or OS-determined compression scheme on a per-page, per group of pages, or global basis.

At a high-level, there are two classifications of content that are executed and/or utilized by a computing platform: instructions and data. In the embodiments herein, data may be selectively compressed by a memory controller using one or more compression schemes, with preference towards compression schemes that are most efficient/beneficial for the format of the uncompressed data. (It will be recognized by those skilled in the art that each compression scheme may be implemented by one or more compression algorithms; for convenience that terminology compression scheme is generally used herein.) Meanwhile, in one embodiment all instructions (or all instruction of a given form) are stored in memory in an uncompressed format, not compressed by the memory controller. In another embodiment, selected instructions may be stored in a compressed form by the memory controller. Generally, a given processor architecture may or may not support compression of instructions, depending on the particular architecture and the format of the instructions.

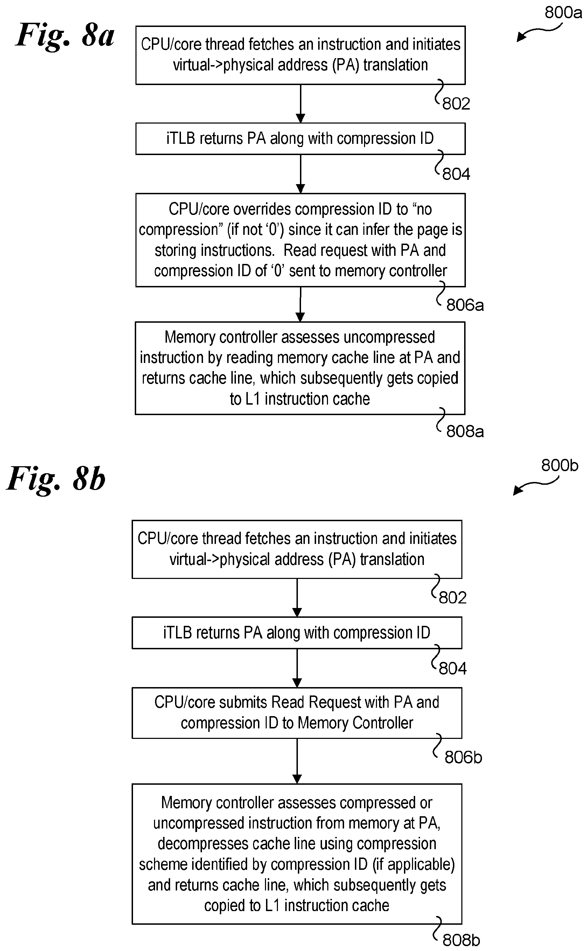

Figure 8a shows a flowchart 800a illustrating operations performed during execution of some instructions under which compression is not used, according to one embodiment. In a block 802 the CPU or processor core fetches an instruction and initiates a virtual address-to-physical address (VA-to-PA) translation. For example, software is executed on a processor in the form of an execution or instruction thread, which is a sequence of instructions that are accessed by the processor. In the architectures illustrated herein, each core includes a pair of L1 caches including an L1 instruction cache and an L2 data cache. Similarly, each of the L1 instruction and data caches includes are respective TLB, referred iTLB and dTLB, as discussed above.

In order to access an instruction occurring in an instruction thread for the first time, the instruction must first be copied into the iTLB from memory. An instruction fetch unit will query the iTLB to determine the location of the instruction. Initially, upon loading of the application or process thread into memory, the instructions will be loaded into memory. Information in the instruction thread is used to identify the address of the instruction - from the viewpoint of both the application/process and operating system, that address is a virtual address. However, since data is stored at physical addresses in memory, a VA-to-PA translation is performed to locate the cache line at which the instruction is stored. For instructions, the VA-to-PA translation is performed by the iTLB, which returns the physical address, along with the compression ID, as depicted in a block 804. Since instructions are stored in their uncompressed form in his embodiment, the CPU or core executing the instruction thread overrides the compression ID (if not already '0'), since the CPU/core can infer the page storing the instruction is not a data page. A read request with the PA and compression ID of '0' (or whatever compression ID is used to indicate no compression) is then sent to the memory controller, as depicted in a block 806a. In a block 808a, the memory controller accesses the uncompressed instruction from memory by reading the cache line at the PA, and the cache line with the instruction is subsequently copied into the L1 instruction cache for the CPU/core where it can be accessed by the CPU/core.

In some embodiments, both instructions and data may be stored in memory in a compressed format. Figure 8b shows a flowchart illustrating operations for retrieving instructions that may be compressed, according to one embodiment. The operations in blocks 802 and 804 are the same described above for flowchart 800a of Figure 8a. In a block 806b, the CPU/core submits a read request with the PA and compression ID to the memory controller. The process is completed in a block 808b in which the memory controller accesses the compressed or uncompressed cache line at the PA, decompresses it using the decompressor for the compression scheme identified by the compression ID (if the cache line data is compressed), and returns the uncompressed cache line, which is subsequently copied into the L1 instruction cache for the CPU/core where it can be accessed by the CPU/core.

Under the embodiments herein, load or store instructions are handled differently other types of instructions (such as shown in Figure 8b). An instruction in the form of load/store includes a reference to an address from which data is read (load) or to which data is written (store) and is part of a load or store transaction. These load/store instructions are generally processed somewhere in the execution pipeline other than the beginning of the pipeline.

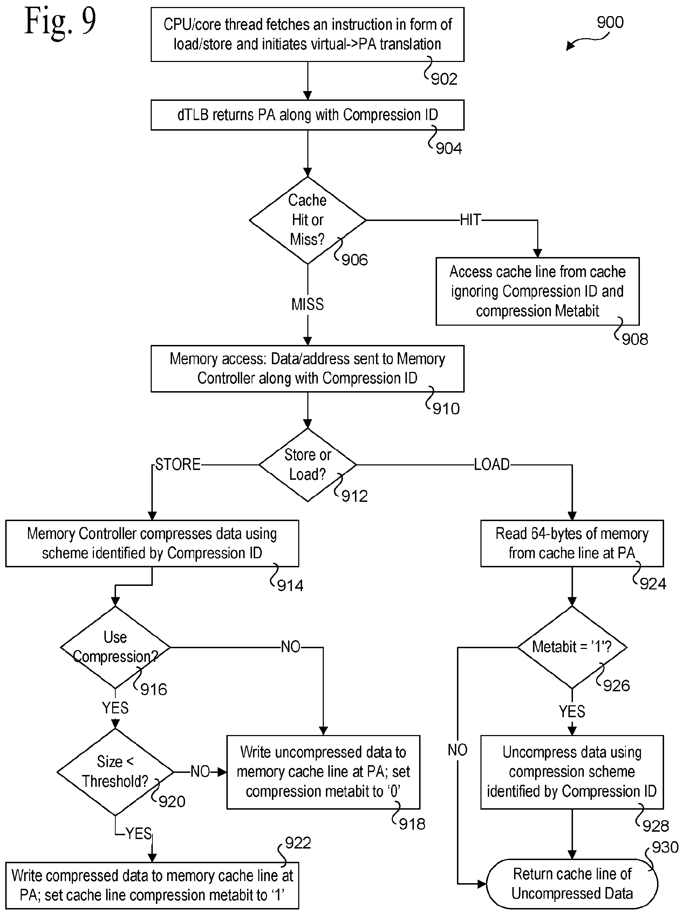

With reference to flowchart 900 of Figure 9, the load or store transaction is initiated in a block 902, where the CPU/core fetches an instruction in the form of load/store and initiates the VA-to-PA translation. Rather than using a fetch unit, this is generally done by some entity in the execution pipeline, which issues a query to the dTLB for the CPU or core, as applicable. In a block 904 the dTLB returns the translated PA along with the compression ID.

In a decision block 906 a determination is made whether a valid copy of the cache line is already in a cache (any of L1, L2, and the LLC). This will generally involve some type of cache snooping using techniques that are well-known in the art, with the result being a 'hit' if a valid copy of the cache line is found or a "miss" if a valid copy is not found. If the snoop results in a hit, the cache line is accessed from the cache identified by the snoop in a block 908 in the conventional manner. As discussed above, in one embodiment data is stored in all levels of cache in an uncompressed form. As a result, the compression ID in the dTLB entry is ignored.

If the cache line snoop results in a miss, the logic proceeds to a block 910 in which a memory access is performed. For a load instruction, the PA of the cache line to be read from memory will be provided to the memory controller, along with the compression ID. For a store instruction, data along with the PA of the cache line at which the data is to be written (stored) is provided to the memory controller, along with the compression ID.

In a decision block 912 a determination is made to whether the instruction is a load or store instruction. If the instruction is a store instruction and a cache write-through is to be performed, the logic proceeds to a block 914 in which the memory controller compresses the data using the compression scheme identified by the compression ID. In a decision block 916, the compression ID is used to determine whether to use compression. For example, if the compression ID is '0' or otherwise the value used to identify no compression, then NO compression will be used, and the logic will proceed to a block 918 in which the uncompressed data will be written to the cache line located at the memory PA. The compression metabit is set to '0' to indicate no compression.

If the compression ID corresponds to one of the compression schemes, the answer to decision block 916 will be YES, and the logic will proceed to a decision block 920 to determine whether the size of the data, once compressed, is less than some predefined threshold. For example, in one embodiment a threshold of 57 bytes is used, noting this is merely exemplary and non-limiting. If the size of the compressed data is less than the threshold, the answer to decision block 920 will be YES and the logic will proceed to a block 922 in which the compressed data is written to the cache line located at the memory PA, and the compression metabit will be set to '1', indicating the cache line contains compressed data. If the size of the compressed data is not less than the threshold, compression will not be used, and the logic proceeds to block 918 to write the uncompressed data to the memory in the manner described above for block 918.

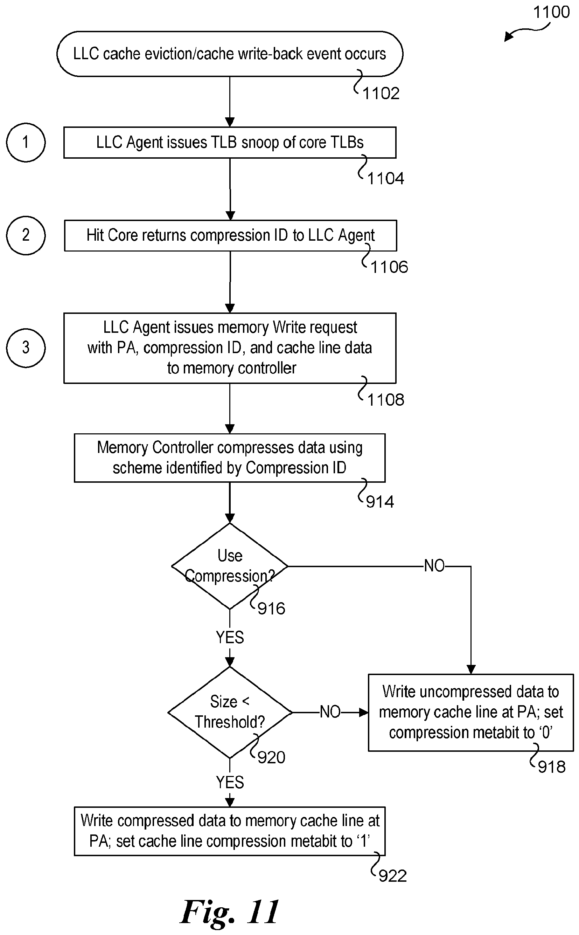

Depending on the execution context (and other potential considerations), execution of a store instruction may or may not results in a cache write-through. In cases under which a cache write-through is not performed, the cache line data will be written to an existing cache line in an L1 cache in an uncompressed format, resulting in a "dirty" cache line. As discussed below with reference to Figure 11, dirty cache line data will be written back to memory in response to an LLC cache eviction of those cache lines.

Returning to decision block 912, if the instruction is a load instruction the answer to decision block 912 is LOAD, and the logic proceeds to a block 924 in which 64 bytes of data from the cache line in memory at the location corresponding to the PA is read. In embodiments or memory architectures including cache lines having a different (than 64 bytes) amount of data, then the applicable amount of data for those cache lines will be read.

In a decision block 926 a determination is made to whether the compression metabit is set to '1', indicating compression. If the answer is YES, the logic proceeds to a block 928 in which the compressed data is uncompressed using a decompressor corresponding to the compression scheme identified by the compression ID. A copy of the cache line with the uncompressed data is then returned, as depicted by a return block 930. If the compression metabit is '0', the cache line does not contain compressed data, and the answer to decision block 926 will be NO, resulting in the logic proceeding to return block 930.

Figure 10 shows selective portions of a platform architecture 1000 including a processor 1002 coupled to system memory 1004. Processor 1002 includes a memory controller 1006, an IOMMU/IOTLB 1008, an LLC 1010, and LLC agent 1011, a mesh fabric 1012, *n* processor cores 106, each including a respective L1 cache 108 and L2 cache 110, and CPU core TLBs 1014. Per core details of one embodiment of the CPU core TLBs 1014 are shown in the lower right-hand portion of Figure 10 and include an iTLB 600, a dTLB 602, an L2 TLB 1016, an L1 agent 1018, and an L2 agent 1020.

System memory 1004 is depicted as a physical address space in which multiple pages 1022 are stored. Each page is depicted with a '0', '1', '2', or '3' to depict the compression scheme (or no compression) used for that page. The first group of pages (going from left-to-right) are allocated to Application 1, while a second group of pages are allocated to Application 2. The pages at the right-hand side of system memory 1004 are allocated for the operating system. In the illustrated embodiment, the operating system is depicted as using all uncompressed pages. Under different embodiments, portions of the operating system may employ one or more compression schemes.

The depiction of the pages for Application 1, Application 2, and the operating system are abstracted for simplicity and illustrated purposes. Under an actual implementation, applications and the operating system may generally use thousands of pages (or more). For simplicity, separate page allocations for a global heap and individual stacks for respective processes (threads) are not shown.

Under some applications, there may be instances where a large contiguous portion of the memory address space uses the same compression scheme. An example of this is illustrated as a page group 1024 allocated for Application 2 that use compression scheme '2'. Examples of applications that may use different compression schemes for groups of pages are machine learning applications, which may employ various models, such as but not limited to models based on artificial neural networks (ANNs), decision tree-based models (*e.g.,* Random Forests and variations thereof), K-Means models, and Support Vector Machine (SVM) models. It is common to have the data used by such models pre-processed to have one or more formats and/or be encoded in a particular manner. For example, numerical data may generally be stored as an integer (*e.g.,* a 32 or 64-bit integer), or a floating-point representation (*e.g.,* float-32 or float-64). Some machine learning applications may be used to process categorial data or a mix of categorical, where the categorical data are stored as strings using an applicable character set, such as the 8-bit ASCII character set.

Another common encoding scheme is known as "one-hot" encoding, which is used to convert categorical data to numerical data, since models based on ANNs can only operate on numerical data. Under one-hot encoding, the categorical values for a given category are encoded in separate columns using binary values; either as a '0' (not present) or '1' (present). This generally results in a sparse binary matrix (often vary sparse, depending on the cardinality of the categorical values). There are other forms of data used by ML models that use binary values ('0's and '1's), including a scheme called "Binary encoding."

While one-hot encoded data may be stored in a manner that is not sparsely encoded, for performance reasons it may be preferable to use sparsely-encoded data. Since '0' and '1' are very short integers, in one embodiment these values are stored as 8-bit integers (int8). They may also be stored as 16-bit integers (int16) in other embodiments.

Figure 10 further depicts a core forwarding a load or store request 1026 including a compression ID obtained from a TLB. As discussed above in Figure 9, a load or store (with a write-through) following a cache miss will include the physical address of the cache line from which data is to be read (load) or written (store), along with a compression ID, which is obtained from a TLB entry in an applicable TLB (e.g., from and iTLB or dTLB when separate instruction and data TLBs are used).

As further illustrated in Figure 10, memory controller 1006 includes one or more compressors 1028 and one or more decompressors 1030. As discussed above with reference to the LOAD branch in Figure 9 (blocks 924, 926, 928, and 930), upon receiving a load instruction with PA and compression ID, the memory controller will read the cache line data located at the PA (block 924). If the compression metabit is a '1' the cache line includes encoded data, and the memory controller will use an applicable decompressor to decompress the data based on the compression ID that is included in the load request. For example, compression ID '1' may use a first compression and decompression scheme, compression ID '2' may use a second compression and decompression scheme, *etc.* Also as discussed above with reference to the STORE branch of Figure 9 (blocks 914, 916, 918, 920, and 922), if the compression ID indicates that a compression scheme is to be used, the memory controller will compress the data in the cache line provided with the store request using an applicable compressor, and then store the compressed data in system memory at the cache line at the PA, and set the compression metabit to '1'.

Generally, compressors 1028 may be configured to implement one or more compression algorithms to effect one of more compression schemes. For example, a single compressor may be used for multiple compression algorithms and schemes, or separate compressors may be used for each compression algorithm/scheme. Similarly, decompressors 1030 may be configured to implement one or more decompression algorithms to effect one of more decompression schemes. The compression and decompression algorithms may be implemented using various types of embedded logic implemented in hardware, such as but not limited to custom circuitry, programmable logic (*e.g.,* an FPGA), a compression and/or decompression engine or accelerator, *etc.*

### LLC Eviction and Cache Write-back

Under one embodiment of a cache architecture using an L1, L2, LLC hierarchy, when cache line data is read from memory a copy of the cache line will be copied to the LLC, and then subsequently copied to the L2 and L1 caches. Once an LLC is full, whenever a new cache line is copied from memory, an existing cache line (in the LLC) needs to be evicted. If the copy to be evicted from the LLC is a "dirty" copy (meaning the copy of the cache line has been modified since it was read), then that copy will be written back to memory. In one embodiment an (M)odified (E)xclusive (S)hared (I)nvalid (MESI) cache coherency scheme is used, where each cache line is marked with one of an 'M', 'E', 'S', or 'I'. If the cache line to be evicted is marked with an 'M', the cache line data is written back to memory. Optionally, a separate bit in the cache line may be used to mark the cache line as dirty. If the cache line to be evicted is not dirty, the cache line is simply evicted without a write-back to memory.

With reference to Figure 10a and flowchart 1100 of Figure 11, cache line write-backs from the LLC are handled using the following process, according to one embodiment. The process begins in a start block 1102, corresponding to an LLC cache line eviction event requiring a write-back. In response to the event, the LLC agent issues a TLB snoop of the TLBs for one or more cores in a block 1104. This is depicted in Figure 10a as an operation '1' (using an encircled '1'). Depending on the cache architecture, the TLB snoop may be broadcast to the L2 agents of all cores or may be sent to the L2 agent of a particular core.

For example, in one embodiment the LLC is inclusive of L1 and L2, and each of the *n* cores is allocated a respective slice of the LLC. The LLC agent can determine which L2 agent to send the TLB snoop to based on the LLC slice the dirty cache line to be evicted is in. In cases where the LLC is non-inclusive and/or does not use slicing, the TLB snoop will be broadcast to all the L2 agents. Under an L1/L2 cache hierarchy with separate agents for the L1 and L2 caches, the L2 agents may forward the TLB snoop to the L1 agents (or otherwise the L1 agents may receive the TLB snoop directly as part of a broadcast or targeted (to a single core) snoop). Under some architectures (not shown), there is a single cache agent for the L1 and L2 caches. In this case, the TLB snoop will be broadcast to the single cache agent for each core, or the single cache agent for a target core.

The TLB snoop is implemented in a manner similar to a cache snoop, except rather than returning a copy of a "hit" cache line, a "hit" TLB will be return the compression ID for the cache line to the LLC agent, as depicted in a block 1106 and an encircled '2' in Figure 10a. In a block 1108, the LLC agent issues a memory write request to the memory controller with the PA of the cache line, the compression ID, and the 64-bytes of cache line data to the memory controller. The memory controller will then write the 64-bytes of data to the cache line in system memory at the PA using the compression scheme identified by the compression ID in a manner similar to that described above for the store instruction with write-through, as depicted by blocks 914, 916, 918, 920, and 922, which are the same blocks shown for the STORE branch in Figure 9.

### Cache Line Formats

Figures 12a and 12b respectively illustrate exemplary formats of a cache line 1200 that is stored in a processor cache and a cache line 1202 stored as it is stored in memory, with both cache lines 1200 and 1202 storing the same 64 Bytes of data. Cache line 1200 is illustrative of a conventional cache line format used in some of today's processors, which includes a dirty bit or flag 1204, a cache line state field 1206, and a tag field 1208, followed by 64 Bytes of data. In some embodiments, the cache line state field stores a two- or three-bit code that identifies a cache line coherency state, such as a two-bit code for the MESI protocol, or a three-bit code for another cache coherency protocol such as MESIF, where the 'F' represents a forwarded state that may be used in a multi-socket platform. Tag field 1208 contains information from which the physical address of cache line 1200 may be determined. In addition to the fields shown, a cache line format used to store the cache line in a processor cache by include additional fields, including fields that may be reserved.

In the illustrated embodiment, cache line 1202 includes a compression metabit 1210 and ECC (error correction code)/parity bits 1212, followed by 64 Bytes of data. Generally, the ECC/parity bits are used for error detection and correction; such codes are well-known in the art and a commonly used in data centers servers and the like and for other types of high-reliability computing platforms. The placement of compression metabit 1210 is exemplary and non-limiting. Under another embodiment, a bit among the ECC/parity bits is repurposed and used as a compression metabit. Other cache line formats may include a reserved field or bit that may be used for a compression metabit.

### Direct Memory Access for IO Devices and Shared Virtual Memory

Various system architectures may include one or more components that access memory using direct memory access (DMA) mechanism. For example, DMA access may be used by an IO card or IO device or peripheral such as a Network Interface Controller (NIC), and accelerator, or a GPU. Generally, a NIC, accelerator, or GPU may be implemented in a chip or in an IO card, such as but not limited to a PCIe card.

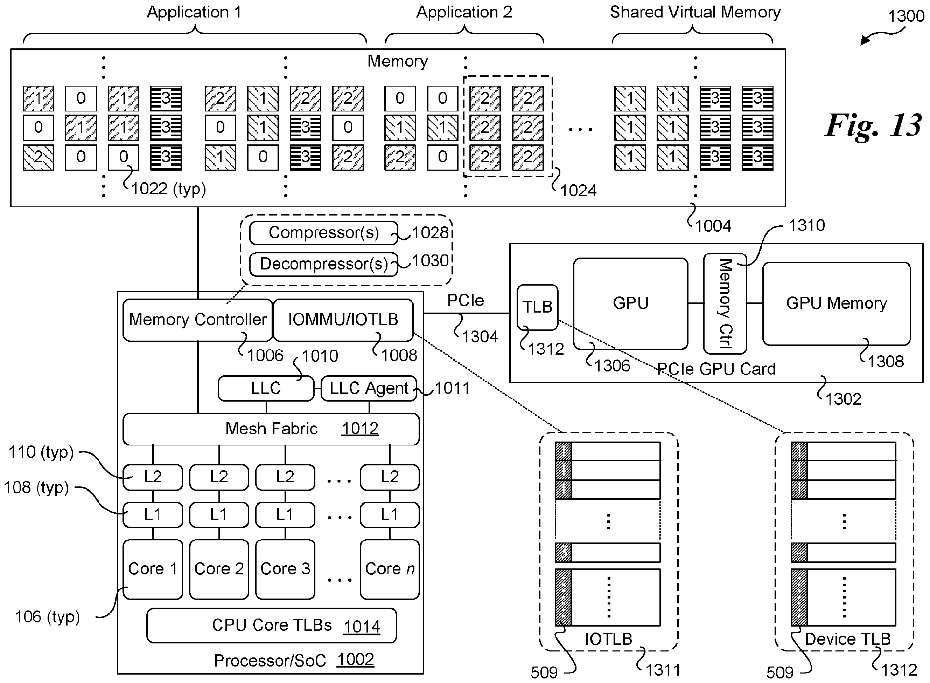

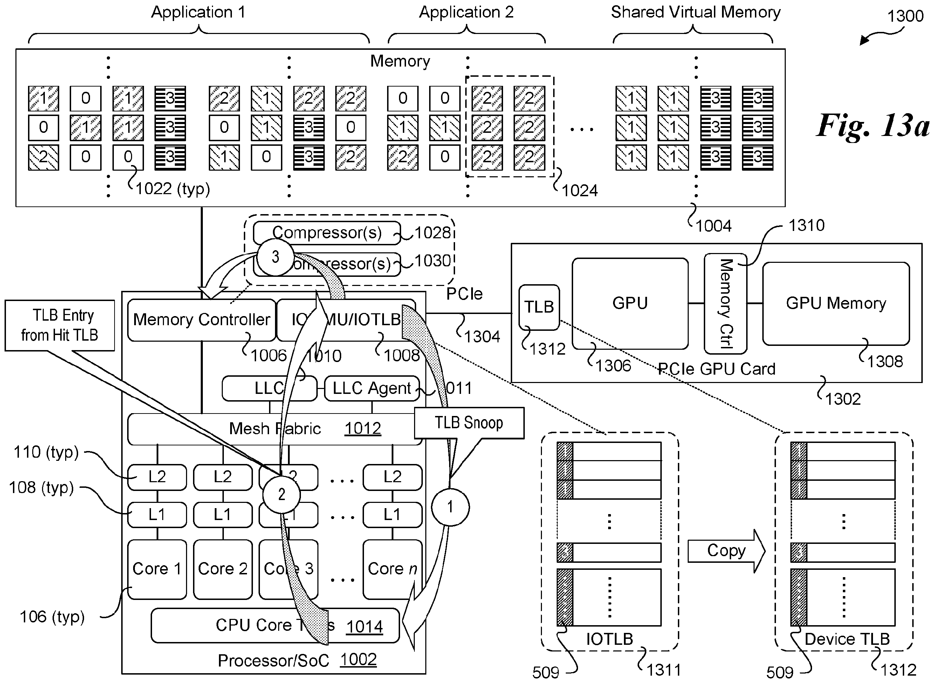

An example of a computer system 1300 with a PCIe GPU card 1302 is shown in Figure 13. PCIe GPU card 1302 is coupled to processor 1002 via a PCIe link 1304. Figure 2 shows further details of how an IO card, such as a GPU card is communicatively coupled internally to mesh fabric 1012 via a PCIe interface and PCIe Root Complex on the processor/SoC (both not shown in Figure 13 for simplicity). PCIe GPU card 1302 includes a GPU coupled to GPU memory 1308 via a memory controller 1310 and a device TLB 1312.

In some system architectures, such as shown in Figure 13, a region of system memory may be employed as shared virtual memory. As its name implies, shared virtual memory is a region of memory that is shared between multiple processes and/or components. Under computer system 1300, the shared virtual memory is shared between a machine learning application running on one or more of cores 106 and GPU 1306. In accordance with aspects of computer system 1300, conventional DMA operations are extended to enable use of compression for SVM memory pages.

Under some embodiment, IO devices that are SVM capable perform address translations before read/write transactions are submitted on the IO fabrics. One mechanism is to have a TLB in the device that caches some translations, such as device TLB 1312 in computer system 1300. If the translation cannot be serviced by the device TLB, the request is sent to the IOTLB in the IOMMU. The address translation is performed by the IOMMU by looking up the IOTLB and if there is no entry, initiating page walks. In the event of page faults, the IOMMU reports the event to software. More details can be found in the PCISIG standard under ATS (address translation service) (for example, see generally, PCI Express Address Translation Service 1.1). Under PCIe, the IOTLB is also referred to as the Address Translation Cache (ATC) to differentiate it from the TLB(s) used by the CPU. Optionally, an ATC may be stored separate from the IOTLB, with updates to the ATC being copied to the IOTLB.

In the embodiments herein, the device TLB and IOTLB are similar to the TLBs used for the processor cores, except they are used for IO memory access, rather than CPU memory access. Accordingly, as with a conventional TLB, the device TLB and IOTLB includes a plurality of TLB entries that are formatted to support VA-to-PA translation. Under the extended TLB entry format disclosed herein, the IOTBL entries have a similar format to that shown in Figure 5 and discussed above, including a compression ID field 509. This is illustrated in Figures 13 and 13a for IOTLB 1311 and device TLB 1312.

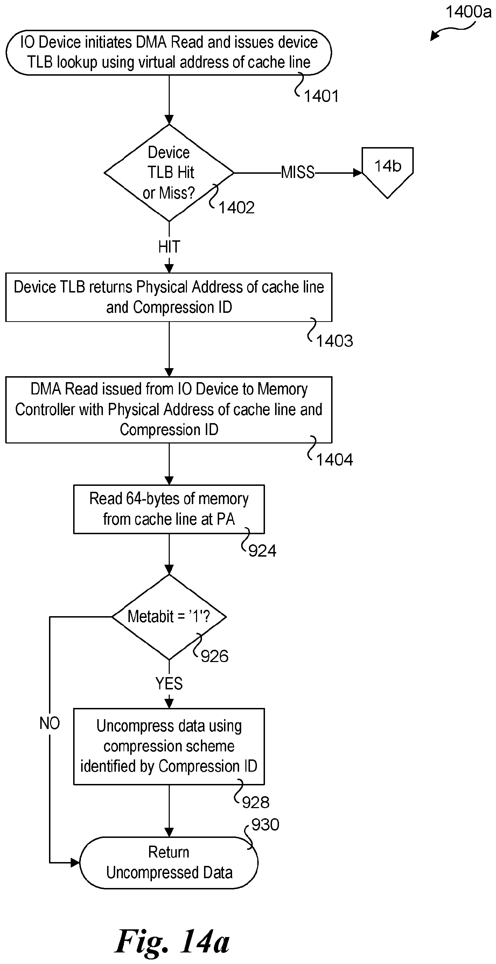

With reference to Figure 13a and flowchart 1400a of Figure 14a, a DMA read request from and IO device such as GPU 1306 to system memory 1004 proceeds as follows. The process begins in a start block 1401 in which the IO device (*e.g.,* GPU 1306 or other IO peripheral or card, such as an accelerator), initiates a DMA read for a memory cache line and issues a TLB lookup of its device TLB using the virtual address for the cache line to be read. As depicted by a decision block 1402 and a block 1403, if the IO device TLB has a hit, the device TLB returns the translated physical address for the cache line along with the compression ID.

In a block 1404 the IO device issues a DMA read to the memory controller with the physical address of the cache line and the compression ID. Once received by the memory controller, the remainder of the DMA read is performed by the memory controller in a similar manner as the LOAD branch in Figure 9, as depicted by blocks 924, 926, 928, and 930. The uncompressed data returned in block 930 is then transferred using a DMA operation to a DMA receive buffer on PCIe GPU card 1302 (not shown) in a manner similar to a conventional DMA transfer.

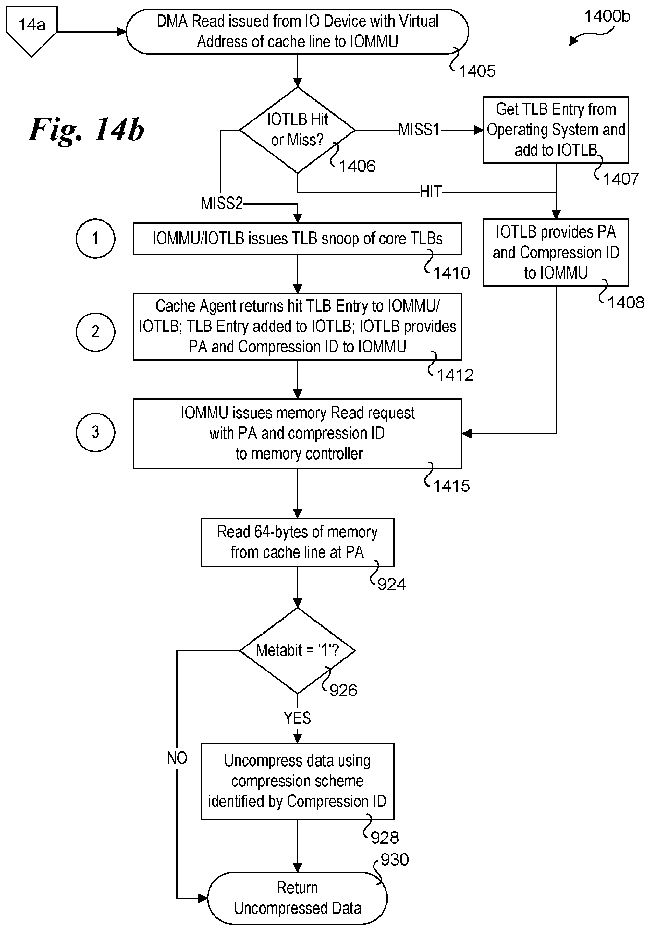

Returning to decision block 1402, if the device TLB lookup results in a miss the logic proceeds to the operations and logic depicted in flowchart 1400b of Figure 14b. This flowchart process begins in a start block 1405 in which the IO device issues a DMA read request to the IOMMU including a virtual address of the cache line to be read. In a decision block 1406 the IOMMU performs a lookup of the IOTLB to determine if one of the IOTLB entries is "hit" using the virtual address. If the result is an IOTLB hit, the logic proceeds to a block 1408 in which the IOTLB provides a translated physical address to the IOMMU, along with the compression ID for the hi IOTLB entry. The logic the proceeds to a block 1414 in which the IOMMU issues a memory read request to the memory controller with the physical address and the compression ID. The memory read is then performed by the memory controller in the same manner as the LOAD branch in Figure 9, as depicted by blocks 924, 926, 928, and 930. The uncompressed data returned in block 930 is then transferred using a DMA operation to a DMA receive buffer on PCIe GPU card 1302 (not shown) in a manner similar to a conventional DMA transfer.

Flowchart 1400b depicts two miss branches, labeled 'MISS1' and 'MISS2'. The 'MISS1' branch corresponds to an extension to a conventional miss approach, under which a TLB entry is generated (in part) by walking the page table to get the physical address for the page and a new TLB entry is written in the IOTLB. The logic then proceeds to block 1408, and subsequently to blocks 1414, 924, 926, 928, and 930 to complete the DMA read, as described above.

The 'MISS2' branch depicts an alternate approach that leverages aspects of SVM under the architecture of computer system 1300. Since the SVM will be accessed by application threads executing on one of more of processor cores 106, one or more of the TLBs associated with the processor cores that are used may include existing TLB entries that may be hit using the virtual address for the TLB lookup. Accordingly, in a block 1410 corresponding to operation '1' the IOMMU or IOTLB issues a TLB snoop to the core TLBs. As depicted by a block 1412, the cache agent associated with the TLB with a hit then returns the hit TLB entry to the IOMMU/IOTLB. The TLB entry is then added to the IOTLB and is processed by the IOTLB to obtain the physical address using the VA-to-PA translation. The PA and compression ID are then provided to the IOMMU. The logic then proceeds to block 1414, and subsequently to blocks 924, 926, 928, and 930 to complete the DMA memory read in the manner described above. If the CPU core TLB snoop also results in a miss, the logic will return to decision block 1404 and take the MISS1 path (not shown).

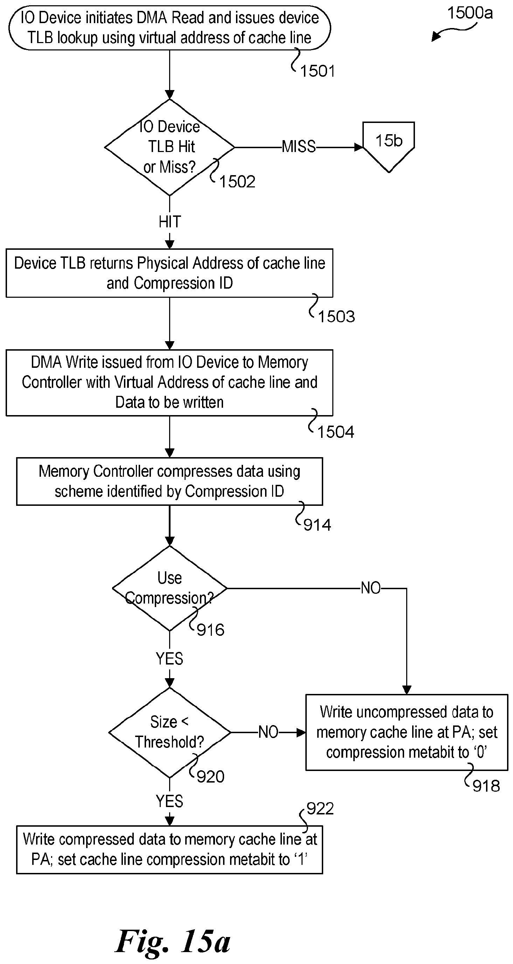

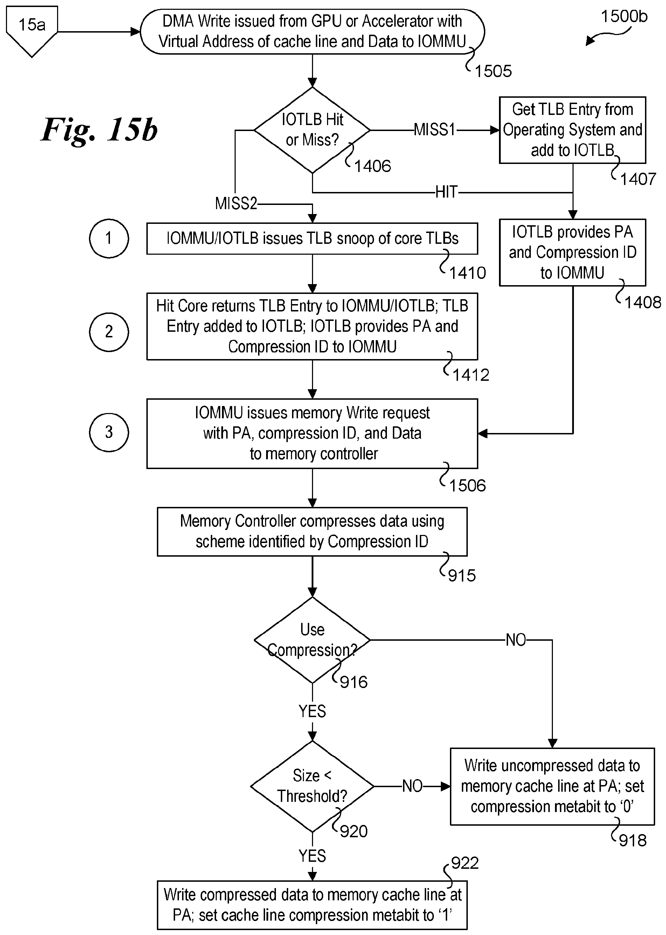

Figures 15a and 15b respectively depict flowcharts 1500a and 1500b illustrating operations and logic for implementing a DMA write, according to one embodiment. With reference to flowchart 1500a, the process begins in a start block 1501 in which the IO device (*e.g.,* GPU 1306 or other IO peripheral or card, such as an accelerator), initiates a DMA write for a memory cache line and issues a TLB lookup of its device TLB using the virtual address of the cache line for which data is to be written. As depicted by a decision block 1502 and a block 1503, if the IO device TLB has a hit, the device TLB returns the translated physical address for the cache line along with the compression ID.

In a block 1504 the IO device issues a DMA write to the memory controller with the physical address of the cache line and the data to be written to the cache line. As depicted by blocks 914, 916, 918, 920, and 922, the memory controller than uses the compression ID to write the data to the memory cache line using a compression algorithm or no compression is identified by the compression ID in a manner similar to the STORE branch of Figure 9 discussed above.

Returning to decision block 1502, if the device TLB lookup results in a miss the logic proceeds to the operations and logic depicted in flowchart 1500b of Figure 15b. This flowchart process begins in a start block 1505 in which a DMA write referencing the virtual address of a cache line in memory to which data is to be written using a DMA operation is issued from the IO device to the IOMMU. As depicted by like-numbered blocks 1406, 1407, 1408, 1410, and 1412 in Figures 14b and 15b, the operations for obtaining the physical address and compression ID are similar to those discussed above for a DMA read request.

In a block 1506, the IOMMU issues a memory write request with the physical address of the memory cache line to which data is to be written, along with the data to be written and the compression ID. As depicted by blocks 914, 916, 918, 920, and 922, the memory controller than uses the compression ID to write the data to the memory cache line using a compression algorithm or no compression is identified by the compression ID in a manner similar to the STORE branch of Figure 9 discussed above.

As further shown in Figure 13a, TLB entries that are added to the IOTLB may be copied to the device TLB so they can be used for future DMA reads and DMA writes. The copying may occur in connection with adding a new entry to an IOTLB in response to a DMA read or DMA write request initiated from a given IO device, with the new entry being returned to the IO device to be written to its device TLB. Optionally, TLB entries may be copied from the IOTLB to a device TLB using a periodic batch process.

Under a producer-consumer model used for machine learning applications that employ distributed processing using a CPU and GPU (or multiple CPUs and GPUs), data to be processed by the ML model, such as during training, validation, or testing of the model, is loaded into SVM by the CPU and subsequently read and processed by the GPU. The results of the GPU processing are then (effectively) returned to the CPU by writing the results to SVM, where they may be accessed by the CPU. By using the SVM approach, the CPU does not have to send the data to the GPU, and the GPU does not have to send the results back to the CPU, thus saving CPU cycles. Rather than sending the data and results, the CPU and GPU may employ some lightweight communication mechanism, such as doorbell rings, to inform each other when data and/or results are available in the SVM.

### Additional Considerations and Extensions

In the foregoing embodiments, write memory bandwidth is saved, while read memory bandwidth is not. For instance, since the size (length) of the compressed data for a given cache line may be determined by the compressor or compression function, only that length of data need be written to the cache line in memory, with padding being used for the saved Bytes (or otherwise employing a scheme to identify the end of the compressed data). Conversely, when the memory controller reads a cache line storing compressed data, the length of the compressed data is unknown, so that memory controller reads the entire cache line. Embodiments that save memory bandwidth may be beneficial for some applications that are write-heavy, or when the application uses non-DRAM memory such as 3D Crosspoint NVDIMMs or other media that have lower write bandwidths or write endurance issues.

The following approaches may be used to save on read bandwidth. Under a first approach, a table is maintained on-chip that has the size (in appropriate granularity such as number of 8-byte chunks) per compressed cache line. Since this could be a large memory when the system has a large physical memory footprint, a cache of the table could also be implemented. A cache miss implies the size is unknown, requiring reading the full 64 bytes.

Under a second approach, portions of the compressed data are iteratively read until successful decompression. This will cause a latency increase; any practical scheme may at most have two sizes for the data (*e.g..,* 64 bytes or 32 bytes), limiting the dependent reads to a worst-case of two.

Under a third approach, the cache lines stored in memory includes a length field that is coded to identify the length of the compressed data portion of the cache line. An example of a cache line 1214 including a length field 1216 is shown in Figure 12c. In one embodiment, the length field is encoded using 4 bits or less. Rather than encode the entire length (which might require 8-bits to cover a range from 0-64 Bytes), a minimum length is predetermined, and the 4 bits or less are used to encode the length of the encoded portion of the cache line data beyond the predetermined length. For example, in one embodiment the predetermined length is 32 Bytes. The encoding also can be more granular than a single Byte, enabling the length encoding to use less bits, such as using the 8-byte chunk encoding scheme. For example, under this approach, lengths of 32, 40, 48, and 56 bytes may be encoded using only 2 bits. This is advantageous since in some embodiments, the number of EEC/Parity bits will be reduced to be repurposed for the encoded length field.

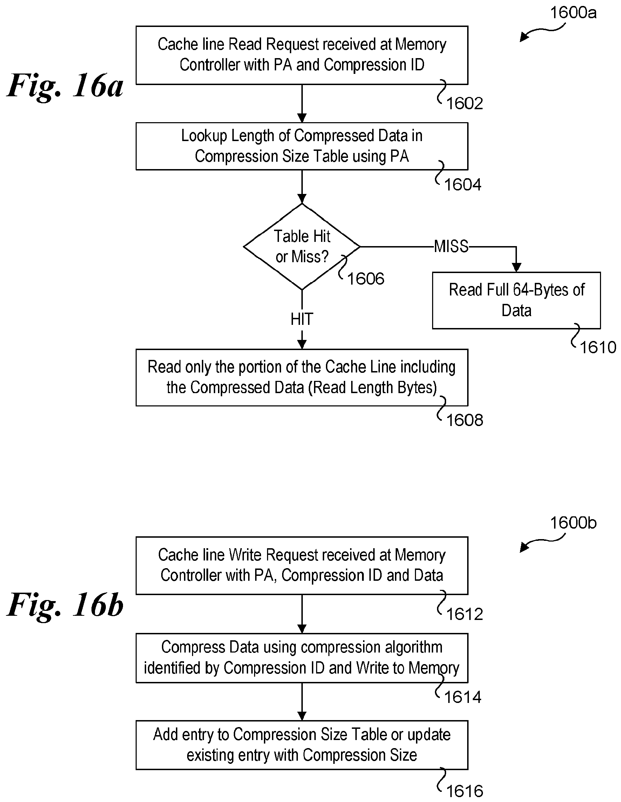

Flowcharts 1600a and 1600b respectively depicting memory read and write processes using the on-chip compressed size table are shown in Figures 16a and 16b. In a block 1602 of flowchart 1600a, a cache line read request is received at the memory controller including the physical address of the cache line to read and the compression ID. In a block 1604 the PA is used to lookup the length of the compressed data in the cache line. As depicted by a decision block 1606 and a block 1608, if the lookup results in a hit, only the portion of the cache line indicated by the compression size value that is hit is read from the cache line at the PA. If the lookup results in a miss, the full 64-Bytes of data are read.

In a block 1612 of flowchart 1600b a cache line write request is received by the memory controller with a physical address, compression ID, and data to be written to the cache line identified by the PA. In a block 1614 the data are compressed using the compression algorithm identified by the compression ID. In conjunction with writing the cache line to memory, an entry is added to the compression size table (or an existing entry is updated) with the size (length) of the compressed data.

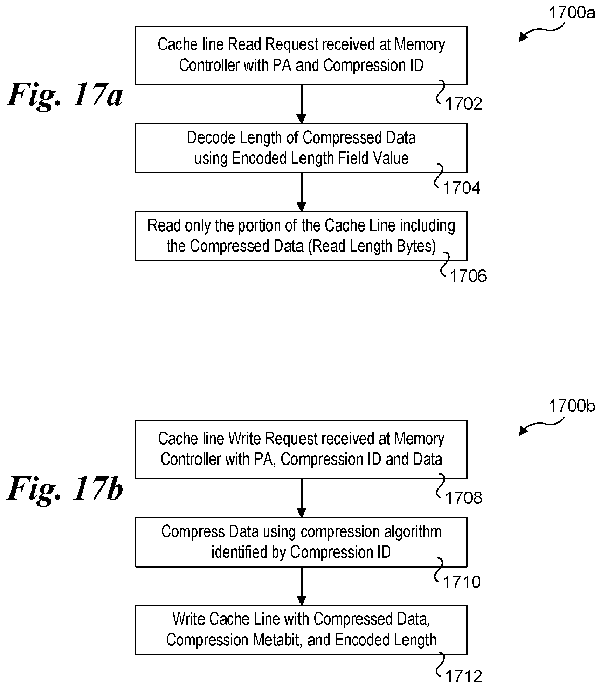

Flowcharts 1700a and 1700b respectively depicting memory read and write processes using the encoded length field are shown in Figures 17a and 17b. In a block 1702 of flowchart 1700a, a cache line read request is received at the memory controller including the physical address of the cache line to read and the compression ID. In a block the length of the compressed data is decoded using the value in the encoded length field. In a block 1706, only the portion of the cache line indicated by the decoded length is read from the cache line at the PA.

In a block 1708 of flowchart 1700b a cache line write request is received by the memory controller with a physical address, compression ID, and data to be written to the cache line identified by the PA. In a block 1710 the data are compressed using the compression algorithm identified by the compression ID. In a block 1712 the cache line is written to memory with the compressed data, the compression metabit set to '1', and the encoded length in the encoded length field.

Under another extension, the ID field may comprise additional information beyond the compression ID value, such as whether the application is read or write heavy, and latency sensitivity. Under such an extension, a hardware system implementing a hybrid of the two approaches for saving read bandwidth may be constructed, using a small on-chip size cache for some applications, and resorting to full reads or iterative reads for other applications depending on the information in the ID field.

As an additional note, when a process is swapped out, we don't need to flush out all the physical cache lines. If the memory controller receives a write that is not caused by a store instruction, but rather by an eviction for which the ID is unavailable, we simply store that line in memory uncompressed. Thus, modified lines can stay in the caches after a process swaps out and will only be written back as/when needed by evictions.

Some further extensions include:
- Using other granularities for storing compression IDs. For example, if there is a process table it might be possible to store the compression IDs in the process table instead of per page.
- If the compression ID is stored per-page, it may also be possible for the application to specify the algorithm with finer granularity. For example, an ML algorithm might use one compression algorithm for weights and activation functions (which will be floating-point), and another for the training data (which may include short integers such as used for one-hot encoding).
- An automatic method for determining which scheme to use on a per-page basis would be to compress the first N bytes with all candidate algorithms, see what works best, and then apply that to the entire page. This could be implemented in the memory controller by extending the hardware to implement a learning mode, where a write is made to the memory controller to see which scheme works best and corresponding information is returned to a monitor, such as an application or operating system component.

Although some embodiments have been described in reference to particular implementations, other implementations are possible according to some embodiments. Additionally, the arrangement and/or order of elements or other features illustrated in the drawings and/or described herein need not be arranged in the particular way illustrated and described. Many other arrangements are possible according to some embodiments.

In each system shown in a figure, the elements in some cases may each have a same reference number or a different reference number to suggest that the elements represented could be different and/or similar. However, an element may be flexible enough to have different implementations and work with some or all of the systems shown or described herein. The various elements shown in the figures may be the same or different. Which one is referred to as a first element and which is called a second element is arbitrary.

In the description and claims, the terms "coupled" and "connected," along with their derivatives, may be used. It should be understood that these terms are not intended as synonyms for each other. Rather, in particular embodiments, "connected" may be used to indicate that two or more elements are in direct physical or electrical contact with each other. "Coupled" may mean that two or more elements are in direct physical or electrical contact. However, "coupled" may also mean that two or more elements are not in direct contact with each other, but yet still co-operate or interact with each other. Additionally, "communicatively coupled" means that two or more elements that may or may not be in direct contact with each other, are enabled to communicate with each other. For example, if component A is connected to component B, which in turn is connected to component C, component A may be communicatively coupled to component C using component B as an intermediary component.

An embodiment is an implementation or example of the inventions. Reference in the specification to "an embodiment," "one embodiment," "some embodiments," or "other embodiments" means that a particular feature, structure, or characteristic described in connection with the embodiments is included in at least some embodiments, but not necessarily all embodiments, of the inventions. The various appearances "an embodiment," "one embodiment," or "some embodiments" are not necessarily all referring to the same embodiments.

Not all components, features, structures, characteristics, *etc.* described and illustrated herein need be included in a particular embodiment or embodiments. If the specification states a component, feature, structure, or characteristic "may", "might", "can" or "could" be included, for example, that particular component, feature, structure, or characteristic is not required to be included. If the specification or claim refers to "a" or "an" element, that does not mean there is only one of the element. If the specification or claims refer to "an additional" element, that does not preclude there being more than one of the additional element.

Letters such as *'m', 'n',* and 'N' in the foregoing detailed description are used to depict an integer number, and the use of a particular letter is not limited to particular embodiments. Moreover, the same letter may be used in separate claims to represent separate integer numbers, or different letters may be used. In addition, use of a particular letter in the detailed description may or may not match the letter used in a claim that pertains to the same subject matter in the detailed description.

As discussed above, various aspects of the embodiments herein may be facilitated by corresponding software and/or firmware components and applications, such as software and/or firmware executed by an embedded processor or the like. Thus, embodiments of this invention may be used as or to support a software program, software modules, firmware, and/or distributed software executed upon some form of processor, processing core or embedded logic a virtual machine running on a processor or core or otherwise implemented or realized upon or within a non-transitory computer-readable or machine-readable storage medium. A non-transitory computer-readable or machine-readable storage medium includes any mechanism for storing or transmitting information in a form readable by a machine (e.g., a computer). For example, a non-transitory computer-readable or machine-readable storage medium includes any mechanism that provides (*i.e.,* stores and/or transmits) information in a form accessible by a computer or computing machine (*e.g*., computing device, electronic system, *etc*.), such as recordable/non-recordable media (*e.g.,* read only memory (ROM), random access memory (RAM), magnetic disk storage media, optical storage media, flash memory devices, *etc*.). The content may be directly executable ("object" or "executable" form), source code, or difference code ("delta" or "patch" code). A non-transitory computer-readable or machine-readable storage medium may also include a storage or database from which content can be downloaded. The non-transitory computer-readable or machine-readable storage medium may also include a device or product having content stored thereon at a time of sale or delivery. Thus, delivering a device with stored content, or offering content for download over a communication medium may be understood as providing an article of manufacture comprising a non-transitory computer-readable or machine-readable storage medium with such content described herein.

The operations and functions performed by various components described herein may be implemented by software running on a processing element, via embedded hardware or the like, or any combination of hardware and software. Such components may be implemented as software modules, hardware modules, special-purpose hardware (*e.g.,* application specific hardware, ASICs, DSPs, *etc.),* embedded controllers, hardwired circuitry, hardware logic, *etc.* Software content (*e.g.,* data, instructions, configuration information, *etc*.) may be provided via an article of manufacture including non-transitory computer-readable or machine-readable storage medium, which provides content that represents instructions that can be executed. The content may result in a computer performing various functions/operations described herein.

As used herein, a list of items joined by the term "at least one of' can mean any combination of the listed terms. For example, the phrase "at least one of A, B or C" can mean A; B; C; A and B; A and C; B and C; or A, B and C.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the drawings. Rather, the scope of the invention is to be determined entirely by the following claims, which are to be construed in accordance with established doctrines of claim interpretation.

## Claims

1. A method implemented on a computing platform comprising system memory and including a processor having a plurality of processor cores, a cache hierarchy, and a memory controller coupled to the system memory via one or more memory channels, the method comprising:
storing data in system memory using a plurality of compression algorithms, wherein the data is stored in memory cache lines in the system memory using two or more compressed formats and an uncompressed format; and
caching copies of memory cache lines in in caches in the cache hierarchy in an uncompressed format;
wherein at least a portion of data stored in the system memory is written to system memory by dynamically compressing the data using the memory controller on a selected basis using the plurality of compression algorithms and storing the data that has been compressed in memory cache lines, and
wherein when data stored in a compressed format is read from the system memory, the memory controller dynamically decompresses the data and returns the data in an uncompressed format.

2. The method of claim 1, further comprising selectively implementing compression in the system memory at a memory page level, wherein for each of a plurality of memory pages, one of the plurality of compression schemes or no compression scheme is selectively used to store data in memory cache lines for that memory page.

3. The method of claim 2, further comprising:
storing information in a page table for each of a plurality of memory pages including,
virtual address-to-physical address mappings; and
a compression identifier (ID) identifying a compression scheme to be selectively used for storing data in memory cache lines for the page;
implementing at least one translation lookaside buffer (TLB) including a plurality of TLB entries for each core, wherein each of the plurality of TLB entries includes a compression ID and information used to map a virtual address to a physical address.

4. The method of claim 3, further comprising:
executing a load instruction on one of the plurality of processor cores, the load instruction referencing a virtual address of a memory cache line in system memory containing data to be loaded;
performing a TLB lookup of a TLB associated with the processor core using the virtual address, the TLB lookup returning a compression ID and a physical address;
submitting a read request to the memory controller including the compression ID and physical address;
reading, via the memory controller, a memory cache line in system memory located at the physical address, the memory cache line storing data in a compressed format;
decompressing, via the memory controller, the data stored in the memory cache line to produce uncompressed data using a decompression algorithm associated with the compression ID; and
writing the uncompressed data to a cache line in the cache hierarchy.

5. The method of claim 3, further comprising:
executing a store instruction on one of the plurality of processor cores, the stored instruction referencing a virtual address of a memory cache line in system memory at which data is to be stored in system memory;
performing a TLB lookup of a TLB associated with the processor core using the virtual address, the TLB lookup returning a compression ID and a physical address;
submitting a write request to the memory controller including the compression ID, the physical address, and the data; and
at the memory controller, compressing the data using a compression algorithm identified by the compression ID and writing the compressed data to a memory cache line in system memory at the physical address.

6. An apparatus, configured to be installed in a computer system including system memory configured to store data in memory cache lines having physical addresses, comprising:
a memory controller, including,
one or more compressors configured to compress data using a plurality of compression algorithms and one or more decompressors configured to decompress compressed data using a plurality of decompression algorithms; and
a memory interface comprising one or more memory channels to support communication with the system memory when the apparatus is installed in the computer system;
wherein the memory controller is configured to,
receive a write request including data in an uncompressed format, a compression identifier (ID), and a physical address identifying a location of a memory cache line at which the data is to be written;
determine a compression algorithm to use or no compression based on the compression ID,
if a compression algorithm is to be used, using a compressor to compress the data using the compression algorithm and storing the compressed data in the memory cache line identified by the physical address;
receive a read request from a requester including a compression ID and a physical address identifying a location of a memory cache line storing data to be read;
determine a decompression algorithm to use or no decompression based on the compression ID;
when a decompression algorithm is to be used, reading compressed data from the memory cache line at the physical address and decompressing the compressed data using a decompressor implementing the decompression algorithm to produce uncompressed data and returning the uncompressed data to the requester; otherwise
when no decompression is to be used, reading uncompressed data from the memory cache line at the physical address and returning the uncompressed data to the requester.

7. The apparatus of claim 6, wherein the memory controller is further configured to:
receive a write request including a compression ID, a physical address, and data to be written to a memory cache line in system memory at the physical address;
compress the data using a compression algorithm identified by the compression ID;
determine if a size of the compressed data is below a threshold; and
write the compressed data to the memory cache line in system memory at the physical address if the size of the compressed data is below the threshold, otherwise write the data in an uncompressed format to the memory cache line.

8. The apparatus of claim 6 or 7, wherein the apparatus is a processor further comprising:
a plurality of processor cores;
a cache hierarchy including at least one level of cache for each of the plurality of processor cores and a last level cache (LLC) that is shared by the plurality of processor cores; and
at least one translation lookaside buffer (TLB) for each processor core, each TLB configured to store a plurality of TLB entries including a compression ID.

9. The apparatus of claim 8, wherein the processor includes an instruction set architecture including a load instruction referencing a virtual address of a memory cache line in system memory containing data to be loaded, and wherein execution of the load instruction on a processor core causes the apparatus to,
perform a TLB lookup of a TLB associated with the processor core using the virtual address, the TLB lookup returning a compression ID and a physical address translated from the virtual address;
issue a read request to the memory controller including the compression ID and the physical address;
read, via the memory controller, a memory cache line in system memory located at the physical address, the memory cache line storing data in a compressed format;
decompress, via the memory controller, the data stored in the memory cache line to produce uncompressed data using a decompression algorithm associated with the compression ID; and
write the uncompressed data to a memory cache line in a cache in the cache hierarchy.

10. The apparatus of claim 8, wherein the processor includes an instruction set architecture including a store instruction referencing a virtual address of a memory cache line in system memory at which data is to be stored, and wherein execution of the store instruction on a processor core causes the apparatus to,
perform a TLB lookup of a TLB associated with the processor core using the virtual address, the TLB lookup returning a compression ID and a physical address translated from the virtual address;
issue a write request to the memory controller including the compression ID, the physical address, and the data; and
at the memory controller, compress the data using a compression algorithm identified by the compression ID and write the compressed data to a memory cache line in system memory at the physical address.

11. A computer system, comprising:
system memory configured to store data in a plurality of memory cache lines, each having a respective physical address;
a processor, including:
a plurality of processor cores;
a cache hierarchy including at least one level of cache for each of the plurality of processor cores and a last level cache (LLC) that is shared by the plurality of processor cores;
at least one translation lookaside buffer (TLB) for each processor core, each TLB configured to store a plurality of TLB entries including a compression identifier (ID);
a memory controller, including,
one or more compressors configured to compress data using a plurality of compression algorithms and one or more decompressors configured to decompress compressed data using a plurality of decompression algorithms; and
a memory interface comprising one or more memory channels coupled to the system memory;
wherein the memory controller is configured to,
receive a write request including data in an uncompressed format, a compression ID, and a physical address identifying a location of a memory cache line at which the data is to be written;
determine a compression algorithm to use or no compression based on the compression ID,
when a compression algorithm is to be used, using a compressor to compress the data using the compression algorithm and storing the compressed data in the memory cache line identified by the physical address;
receive a read request from a requester including a compression ID and a physical address identifying a location of a memory cache line storing data to be read;
determine a decompression algorithm to use or no decompression based on the compression ID;
when a decompression algorithm is to be used, reading compressed data from the memory cache line at the physical address and decompressing the compressed data using a decompressor implementing the decompression algorithm to produce uncompressed data and returning the uncompressed data to the requester; otherwise
when no decompression is to be used, reading uncompressed data from the memory cache line at the physical address and returning the uncompressed data to the requester.

12. The computer system of claim 11, wherein the processor includes an instruction set architecture including a load instruction referencing a virtual address of a memory cache line in system memory containing data to be loaded, and wherein execution of the load instruction on a processor core causes the computer system to,
perform a TLB lookup of a TLB associated with the processor core using the virtual address, the TLB lookup returning a compression ID and a physical address translated from the virtual address;
issue a read request to the memory controller including the compression ID and the physical address;
read, via the memory controller, a memory cache line in system memory located at the physical address, the memory cache line storing data in a compressed format;
decompress, via the memory controller, the data stored in the memory cache line to produce uncompressed data using a decompression algorithm associated with the compression ID; and
write the uncompressed data to a memory cache line in at least one cache for the processor core.

13. The computer system of claim 11 or 12, wherein the processor includes an instruction set architecture including a store instruction referencing a virtual address of a memory cache line in system memory at which data is to be stored, and wherein execution of the store instruction on a processor core causes the computer system to,
perform a TLB lookup of a TLB associated with the processor core using the virtual address, the TLB lookup returning a compression ID and a physical address translated from the virtual address;
issue a write request to the memory controller including the compression ID, the physical address, and the data; and
at the memory controller, compress the data using a compression algorithm identified by the compression ID and write the compressed data to a memory cache line in system memory at the physical address.

14. The computer system of any of claims 11-13, further configured to:
select a dirty cache line in the LLC to be evicted from the LLC;
perform a TLB snoop to locate a TLB entry associated with the dirty cache line, the TLB snoop returning a compression ID for the dirty cache line;
issue a write request to the memory controller including data from the dirty cache line, the compression ID, and a physical address of a memory cache line in system memory to which the data is to be written; and
at the memory controller, compress the data using a compression algorithm identified by the compression ID and write the compressed data to the memory cache line in system memory at the physical address.

15. The computer system of any of claims 11-14, wherein the memory controller is configured to write cache lines to the system memory having a format including a compression metabit indicating whether the cache line that is written includes compressed data.
